(19) Europäisches Patentamt
European Patent Office
Office européen des brevets

(11) **EP 4 603 331 A1**

(12) **EUROPEAN PATENT APPLICATION**
published in accordance with Art. 153(4) EPC

(43) Date of publication:
**20.08.2025 Bulletin 2025/34**

(21) Application number: **23877098.6**

(22) Date of filing: **20.09.2023**

(51) International Patent Classification (IPC):
***B60Q 1/115*** *(2006.01)*

(52) Cooperative Patent Classification (CPC):
**B60Q 1/115**

(86) International application number:
**PCT/JP2023/034134**

(87) International publication number:
**WO 2024/080092 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 JP 2022165702**
**14.10.2022 JP 2022165703**
**14.10.2022 JP 2022165704**

(71) Applicant: **Koito Manufacturing Co., Ltd.**
**Tokyo 141-0001 (JP)**

(72) Inventors:
- **SHIOTA Shohei**
  **Shizuoka-shi, Shizuoka 424-8764 (JP)**
- **YAMAMOTO Hiroki**
  **Shizuoka-shi, Shizuoka 424-8764 (JP)**
- **SHIBATA Yoshinori**
  **Shizuoka-shi, Shizuoka 424-8764 (JP)**
- **KAMIYA Misako**
  **Shizuoka-shi, Shizuoka 424-8764 (JP)**
- **OYAMA Sanae**
  **Shizuoka-shi, Shizuoka 424-8764 (JP)**

(74) Representative: **Cabinet Beau de Loménie**
**103, rue de Grenelle**
**75340 Paris Cedex 07 (FR)**

# (54) METHOD FOR CREATING DATABASE, LEVELING CONTROL METHOD, DATABASE, AND CONTROL SYSTEM

(57) There is provided a method for creating a database used for leveling control of a vehicle lamp and including map information 41 for vehicle traveling and a plurality of reference positions associated with the map information, in which a representative value is set based on a plurality of pieces of gradient information 42 within a region including at least one reference position and is stored in association with the reference position.

*FIG.1*

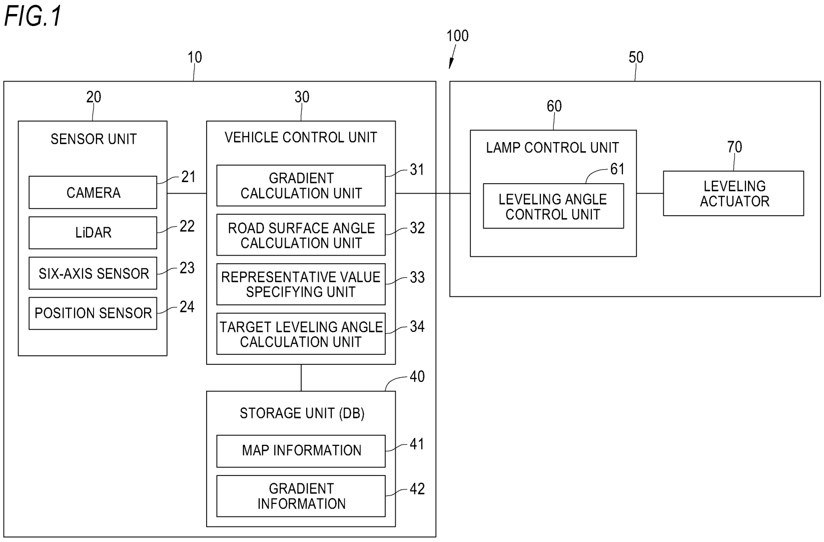


EP 4 603 331 A1

## Description

### TECHNICAL FIELD

The present disclosure relates to a method for creating a database, a leveling control method, a database, and a control system.

### BACKGROUND ART

Recently, a vehicle lamp (headlamp) having an auto-leveling function that automatically adjusts an irradiation range in a vertical direction in response to a front-rear inclination of a vehicle has become widespread. For example, Patent Literature 1 discloses calculating an inclination angle of a vehicle by a gravity sensor and controlling an optical axis of a headlamp based on the inclination angle.

### CITATION LIST

### PATENT LITERATURE

Patent Literature 1: JP2000-85459A

### SUMMARY OF INVENTION

### TECHNICAL PROBLEM

The technology disclosed in Patent Literature 1 calculates an inclination angle at a current traveling point of the vehicle and controls a leveling angle in response to the inclination angle.

However, it is not configured to store gradient information including the calculated inclination angle of the vehicle. Therefore, for example, when the vehicle has traveled on the same road multiple times, the gradient information calculated upon previous traveling cannot be effectively utilized.

In addition, in the case of a configuration in which all the past gradient information is stored and a target leveling angle is calculated by referring to all the past gradient information when the vehicle travels on the same road, there is an issue in that a data size of the gradient information to be stored in response to a traveling distance of the vehicle and a calculation time for the target leveling angle increase. Further, since the past gradient information may include gradient information calculated and acquired based on travel along a different route from the currently traveled route, and the inclination angle of the vehicle body is also different when the traveling route is different, so that past gradient information may have low accuracy. Accordingly, there is an issue in that if the target leveling angle of the headlamp is calculated using the inclination angle of the gradient information calculated and acquired based on travel along a different route, as it is, the accuracy of the leveling angle to be controlled may decrease.

In addition, there is an issue in that since the sensor information acquired by the gravity sensor or the like has variations, the accuracy of the leveling angle to be controlled may decrease.

A first object of the present disclosure is to create a database for leveling control that enables shortening of a calculation time for a target leveling angle by reducing a size of data to be stored while effectively utilizing past gradient information.

A second object of the present disclosure is to create a database for leveling control that enables high-accuracy leveling control by effectively utilizing past gradient information.

A third object of the present disclosure is to provide a leveling control system capable of high-accuracy leveling control by effectively utilizing past gradient information.

### SOLUTION TO PROBLEM

A method for creating a database according to an aspect of the present disclosure for achieving the first object, which is used for leveling control of a vehicle lamp and includes map information for vehicle traveling and a plurality of reference positions associated with the map information, the method including setting a representative value based on a plurality of pieces of gradient information within a region including at least one of the reference positions, and storing the representative value in association with the reference position.

A method for creating a database according to an aspect of the present disclosure for achieving the second object, which is used for leveling control of a vehicle lamp and includes map information for vehicle traveling and a plurality of reference positions associated with the map information, the method including assigning a weight to a plurality of pieces of gradient information within a region including at least one of the reference positions, and storing the weighted gradient information.

A vehicle lamp control system according to an aspect of the present disclosure for achieving the third object is a control system for setting a target leveling angle of a vehicle lamp by using a database including advancing direction information and gradient information associated with the advancing direction information, the control system including:

an advancing direction estimation unit configured to estimate a predicted advancing direction of the vehicle from at least position information of the vehicle,
a determination unit configured to determine whether a plurality of advancing directions correspond with each other, and
a target leveling angle calculation unit configured to calculate a target leveling angle of a vehicle lamp corresponding to a road surface angle,
in which when the determination unit determines that the predicted advancing direction estimated by the advancing direction estimation unit corresponds with the advancing direction information recorded in advance in the database, the target leveling angle calculation unit sets a target leveling angle based on the gradient information associated with the advancing direction information.

## ADVANTAGEOUS EFFECTS OF INVENTION

According to the present disclosure, it is possible to create a database for leveling control that enables shortening of a calculation time for a target leveling angle by reducing a size of data to be stored while effectively utilizing past gradient information.

In addition, according to the present disclosure, by assigning a weight to the gradient information, it is possible to create a database for leveling control that enables high-accuracy leveling control by effectively utilizing past gradient information.

Additionally, according to the present disclosure, it is possible to provide a leveling control system capable of high-accuracy leveling control by effectively utilizing past gradient information.

## BRIEF DESCRIPTION OF DRAWINGS

FIG. 1 is a block diagram showing a configuration of a leveling control system according to a first embodiment of the present disclosure.
FIG. 2 is a conceptual view showing a target leveling angle and an actual leveling angle when a vehicle is traveling on a road surface.
FIG. 3 is a view showing a format of gradient information according to the first embodiment of the present disclosure.
FIG. 4 is a schematic view for illustrating an inclination angle of a vehicle.
FIG. 5 is a conceptual view for illustrating map information according to the first embodiment of the present disclosure.
FIG. 6 is a flow chart showing database creation processing according to the first embodiment of the present disclosure.
FIG. 7 is a view for illustrating a method for determining reliability of gradient information according to the first embodiment of the present disclosure.
FIG. 8 is a flow chart showing leveling control processing according to the first embodiment of the present disclosure.
FIG. 9 is a block diagram showing a configuration of a leveling control system according to a second embodiment of the present disclosure.
FIG. 10 is a view showing a format of gradient information according to the second embodiment of the present disclosure.
FIG. 11 is a conceptual view for illustrating map information according to the second embodiment of the present disclosure.
FIG. 12 is a view showing a format of a representative value of gradient information according to the second embodiment of the present disclosure.
FIG. 13 is a flow chart showing database creation processing according to the second embodiment of the present disclosure.
FIG. 14 is a view for illustrating a method for calculating a weight coefficient of gradient information according to the second embodiment of the present disclosure.
FIG. 15 is a flow chart showing leveling control processing according to the second embodiment of the present disclosure.

FIG. 16 is a block diagram showing a configuration of a leveling control system according to a third embodiment of the present disclosure.

FIG. 17 is a conceptual diagram showing a target leveling angle and an actual leveling angle when a vehicle is traveling on a road surface.

FIG. 18 is a conceptual view for illustrating a predicted advancing direction.

FIG. 19 is a view showing a format of gradient information according to a reference example.

FIG. 20 is a view showing a format of gradient information according to the third embodiment of the present disclosure.

FIG. 21 is a conceptual view for illustrating a method for referring to gradient information according to the third embodiment of the present disclosure.

FIG. 22 is a flow chart showing leveling control processing according to the third embodiment of the present disclosure.

DESCRIPTION OF EMBODIMENTS

The present disclosure relates to a method for creating a database, a leveling control method, and a database. First, a configuration of a leveling angle control system according to a first embodiment of the present disclosure will be described. Subsequently, a leveling angle control method and a method for creating a database will be described. Subsequently, a method for calculating an inclination angle, a method for storing gradient information, a method for determining reliability of gradient information, and a method for calculating a weight coefficient of gradient information will be described. Subsequently, a leveling angle control flow based on gradient information will be described.

Subsequently, a configuration of a leveling angle control system according to a second embodiment of the present disclosure will be described. Subsequently, a method for creating a database will be described. Subsequently, a method for calculating an inclination angle, a method for storing gradient information, a method for determining reliability of gradient information, and a method for calculating a weight coefficient of gradient information will be described. Subsequently, a leveling angle control flow based on gradient information will be described.

In addition, the present disclosure relates to a control system. First, a format of gradient information will be described. Subsequently, a method for calculating an inclination angle and a method for referring to gradient information will be described. Subsequently, a leveling angle control flow based on gradient information will be described.

<Configuration of Leveling Angle Control System 100>

FIG. 1 is a block diagram showing an example of a configuration of a leveling angle control system 100 (hereinafter, also referred to simply as "system 100") according to a first embodiment of the present disclosure. The system 100 is a system that controls a leveling angle at a predetermined first point ahead of a current traveling point based on a road surface angle at a point ahead of the current traveling point of a vehicle 10.

The system 100 is a system that controls a leveling angle of a headlamp 50 for a vehicle. The system 100 includes, for example, the vehicle 10 and the headlamp 50.

The vehicle 10 includes, for example, a sensor unit 20, a vehicle control unit 30, and a storage unit (database) 40. Note that the sensor unit 20 may also be provided in the headlamp 50. Additionally, the storage unit 40 may also be provided in the headlamp 50 or may also be configured to be provided outside the vehicle 10 (e.g., in a data center communicatively connectable to the vehicle 10).

The sensor unit 20 includes, for example, a camera 21, a LiDAR (Light Detection And Ranging) 22, a six-axis sensor 23, and a position sensor 24. The camera 21 is provided to be capable of capturing at least a region ahead of the vehicle 10. The LiDAR 22 is provided to be capable of acquiring an image of at least a region ahead of the vehicle 10.

The six-axis sensor 23 is, for example, a six-axis acceleration sensor that detects acceleration and angular velocity in each direction of an x-axis, a y-axis, and a z-axis orthogonal to each other. The six-axis sensor 23 is attached to the vehicle 10 such that, for example, the x-axis aligns with an axis in a front-rear direction of the vehicle 10, the y-axis aligns with an axis in a left-right direction of the vehicle 10, and the z-axis aligns with an axis in an upper-lower direction of the vehicle 10.

The position sensor 24 is a sensor that detects position information of the vehicle 10, and is for example, a GPS (Global Positioning System) sensor or a GNSS (Global Navigation Satellite System) sensor.

Data obtained by the camera 21, the LiDAR 22, the six-axis sensor 23, and the position sensor 24 is output to the vehicle control unit 30.

The vehicle control unit 30 includes a gradient calculation unit 31, a road surface angle calculation unit 32, a representative value specifying unit 33, and a target leveling angle calculation unit 34.

The vehicle control unit 30 controls various operations of the vehicle 10, such as traveling. The vehicle control unit 30 includes a processor, such as an application specific integrated circuit (ASIC), a field programmable gate array (FPGA), or a general-purpose central processing unit (CPU). In addition, although not shown, the vehicle 10 includes, for example, a ROM (Read Only Memory) in which various vehicle control programs are stored, and a RAM (Random Access Memory) in which various vehicle control data is temporarily stored. The processor of the vehicle control unit 30 can develop data designated from various vehicle control programs stored in the ROM onto the RAM and control various operations of the vehicle 10 in cooperation with the RAM.

The headlamp 50 is mounted on the vehicle 10 and irradiates a region ahead of the vehicle 10 with light. The headlamp 50 includes, for example, a light source unit that emits light, a leveling actuator 70, and a lamp control unit 60 that controls the light source unit and the leveling actuator 70.

The lamp control unit 60 includes a leveling angle control unit 61. The lamp control unit 60 includes a processor, such as an ASIC, an FPGA, or a general-purpose CPU. In addition, although not shown, the lamp control unit 60 includes, for example, a ROM (Read Only Memory) in which various control programs are stored, and a RAM (Random Access Memory) in which various control data is temporarily stored. The processor of the lamp control unit 60 can develop data designated from various control programs stored in the ROM onto the RAM and control various operations of the headlamp 50 in cooperation with the RAM.

The leveling angle control unit 61 controls a leveling angle of the headlamp 50 via the leveling actuator 70.

Incidentally, there is a case where time is required after the leveling actuator 70 provided in the headlamp 50 starts operating until the leveling angle reaches a target value (target leveling angle θ).

For example, there is a case where about 0.1 to 0.5 second is required after the target leveling angle θ is calculated until the leveling angle actually reaches the target leveling angle θ. Alternatively, the light source of the headlamp 50 may be composed of a plurality of LEDs, and the leveling angle may be controlled in a pseudo manner by controlling on and off states of each LED. Even in this case, about 0.1 to 0.5 second may be required after the target leveling angle θ is calculated until the leveling angle actually reaches the target leveling angle θ. As such, a delay time occurs after the leveling actuator 70 starts operating until the leveling angle reaches a target leveling angle θ.

For this reason, even starting the operation of the leveling actuator 70 at the current traveling point is too late, as the leveling angle is set to a predetermined value based on a gradient of the road surface at the current traveling point of the vehicle 10. Therefore, in the system 100 of the present disclosure, when the vehicle reaches the current traveling point, control is initiated to achieve the target leveling angle θ based on a gradient of the road surface at a certain point (referred to as a first point in the following description) ahead of the current traveling point, thereby controlling the leveling angle so that an appropriate leveling angle is achieved when the vehicle 10 reaches the first point.

To realize such control, the leveling angle control unit 61 operates based on various inputs from the vehicle control unit 30.

<Leveling Angle Control Method>

A leveling angle control method of the vehicle 10 will be described with reference to FIG. 2.

FIG. 2 is a conceptual view showing the target leveling angle θ and an actual leveling angle when the vehicle 10 is traveling on a road surface.

As shown in (a) of FIG. 2, when the vehicle 10 is traveling on a flat road surface, the leveling angle of the headlamp 50 is set such that a center point of a light distribution pattern (point O where an H line and a V line intersect) is positioned, for example, 70 m ahead of the vehicle 10. For example, the leveling angle at this time (indicated by a line H2 in FIG. 2) is tilted downward by about 0.5 degree with respect to a horizontal direction (indicated by a line H1 in FIG. 2). In the following description, the angle tilted downward by 0.5 degree with respect to the horizontal direction during traveling on the flat road surface is referred to as a reference leveling angle of the headlamp 50, and the leveling angle of the headlamp 50 is expressed as an angle deviating from the reference leveling angle.

Note that the reference leveling angle has different values depending on the attachment height of the headlamp 50 to the vehicle 10, laws and regulations, and the like. '0.5 degree' is just a number used for specific description.

Basically, the leveling angle of the headlamp 50 is set to an angle corresponding to an angle of the road surface on which the vehicle 10 is traveling. For example, when the road surface ahead of the vehicle slopes downward as shown in (b) of FIG. 2 (the road surface angle is negative), the irradiation reference point will be positioned farther than 70 m ahead of the vehicle 10 if the reference leveling angle is maintained. Therefore, by tilting the leveling angle further downward than the reference leveling angle, as indicated by a line H3, the irradiation reference point is positioned 70 m ahead of the vehicle 10.

The target leveling angle calculation unit 34 calculates the target leveling angle θ of the headlamp 50 based on a representative value within a region corresponding to the current traveling point of the vehicle 10 or the advancing direction of the vehicle.

For example, the target leveling angle calculation unit 34 specifies the current traveling point of the vehicle 10 based on sensor information detected by the position sensor 24. Additionally, the target leveling angle calculation unit 34 specifies the advancing direction of the vehicle 10 based on a traveling point history. Additionally, the target leveling angle calculation unit 34 specifies a predetermined point (first point) ahead of the vehicle 10 based on the current traveling point and the advancing direction.

Additionally, the target leveling angle calculation unit 34 reads out gradient information 42 at the first point stored in the storage unit 40. FIG. 3 shows a format of the gradient information 42 stored in the storage unit 40. As shown in FIG. 3, the storage unit 40 stores position information and an inclination angle $\phi$ at that position. Therefore, the target leveling angle calculation unit 34 specifies the inclination angle $\phi$ at a position corresponding with the first point or at a position closest to the first point.

The target leveling angle calculation unit 34 calculates the target leveling angle $\theta$ at the first point based on the specified inclination angle $\phi$ at the first point. The vehicle control unit 30 outputs the calculated target leveling angle $\theta$ to the lamp control unit 60, and the leveling angle control unit 61 of the lamp control unit 60 controls the leveling angle to correspond with the input target leveling angle $\theta$.

<Method for Creating Database>

Incidentally, in the system 100 according to the first embodiment of the present disclosure, each data of the gradient information 42 is acquired by the six-axis sensor 23 and position sensor 24 of the sensor unit 20, and is used when calculating the target leveling angle $\theta$ as described above. The vehicle control unit 30 acquires sensor information every predetermined time, such as every millisecond, while the vehicle 10 is traveling, and stores it in the storage unit 40 in association with a detection time, as shown in FIG. 3. In the present disclosure, as shown in FIG. 3, for groups of data sets, each including detection time, position information (North latitude and East longitude), height, roll angle, pitch angle, yaw angle, road surface angle, and advancing direction, a gradient information ID to make each group of data sets identifiable is assigned. The gradient information ID and the one group of data sets are collectively referred to as the gradient information 42.

The gradient calculation unit 31 calculates the roll angle based on an output of angular acceleration around the X-axis of the six-axis sensor 23 and stores it in the storage unit 40. In addition, the gradient calculation unit 31 calculates the advancing direction based on a difference between the position information at the current time and the position information at the previous detection time.

<Method for Calculating Inclination Angle>

A method for calculating the inclination angle $\phi$ at the current traveling point of the vehicle 10 will be described with reference to FIG. 4.

FIG. 4 is a schematic view for illustrating the inclination angle $\phi$ of the vehicle. The inclination angle $\phi$ is a sum of a road surface angle $\theta r$, which is an inclination angle of the road surface with respect to the horizontal plane, and a vehicle angle $\theta v$, which is an inclination angle of the vehicle 10 with respect to the road surface. The road surface angle $\theta r$ is an angle that represents a gradient of the road surface at that point. The vehicle angle $\theta v$ is a fixed angle determined for each vehicle type. The vehicle angle $\theta v$ is recorded in the storage unit 40 or the like.

The gradient calculation unit 31 calculates the inclination angle $\phi$ from the following equation (1) based on a detection value vector Gx in the x-axis direction of a gravitational acceleration vector G detected by the six-axis sensor 23 and a detection value vector Gz in the z-axis direction of the gravitational acceleration vector G. Note that the calculation of the inclination angle $\phi$ is not limited to the above example, and other known methods may also be used.

[Equation 1]

$$\phi = tan^{-1} \frac{|Gx|}{|Gz|} \quad \cdots \quad (1)$$

Note that an example of calculating the inclination angle $\phi$ based on the output of the six-axis sensor 23 has been described, but the present disclosure is not limited thereto. The gradient calculation unit may also calculate the gradient angle $\phi$ at a specific point ahead of the vehicle 10 based on three-dimensional image data output by the camera 21 or LiDAR 22. To calculate the inclination angle $\phi$, any known image analysis method of the related art can be used without any particular limitation.

Incidentally, when the sensor information is acquired as described above and the gradient information 42 is calculated for all points, a data size of the gradient information 42 increases. As a result, a large-capacity storage unit 40 is required, and a calculation time for calculating the target leveling angle θ also increases. Therefore, the system 100 according to the first embodiment of the present disclosure does not store the gradient information 42 for all positions on the map, but sets a reference position on the map and stores a representative value in association with the reference position. The representative value set for the reference position is a value set based on a plurality of pieces of gradient information 42 within a region Ar including at least one reference position.

The reference position and the representative value will be described with reference to FIG. 5. FIG. 5 is a conceptual view for illustrating map information 41 according to the first embodiment of the present disclosure. As shown in FIG. 5, in the map information 41, a map for vehicle traveling is divided into a plurality of regions Ar by a grid Gr. Each region Ar is associated with the gradient information 42 including the road surface angle θr of the vehicle 10 calculated by the gradient calculation unit 31 during past traveling. In addition, a representative value specified based on the plurality of pieces of gradient information 42 by the representative value specifying unit 33 is associated with the reference position.

Note that the reference position may be, for example, a center point of each region Ar. In addition, the reference position is not limited to one in each region Ar and may also be provided in multiples.

In addition, the plurality of regions Ar divided by the grid Gr may be variable regions corresponding to the number of pieces of gradient information 42. By making the plurality of regions Ar variable regions, the range of the regions can be varied in response to the road environment at the traveling point of the vehicle 10, thereby improving the accuracy of the gradient information 42 to be referred to.

For example, if the number of pieces of gradient information 42 included in a certain region Ar is equal to or less than a predetermined value, the region Ar may be enlarged to increase the number of pieces of gradient information 42 to be referred to.

In addition, the map for vehicle traveling may be divided into a plurality of circular regions rather than the grid Gr.

In addition, as shown in FIG. 5, the current position and current advancing direction of the vehicle 10 can be specified from the position information and advancing direction of the gradient information ID at the latest detection time in the gradient information 42 shown in FIG. 3.

The representative value specifying unit 33 specifies the reference position in each divided region of the map information 41 and the representative value of the gradient information 42 from the map information 41 stored in the storage unit 40 and the gradient information 42 associated with the map information 41. The representative value specifying unit 33 may specify, for example, an average value or median value of the plurality of pieces of gradient information 42 in each region, as the representative value. In addition, the representative value is not limited to one in each region and may be provided in multiples. The vehicle control unit 30 stores the specific value specified by the representative value specifying unit 33 in the storage unit 40 in association with the map information 41.

<Method for Storing Gradient Information>

A method for storing the gradient information 42 by the gradient calculation unit 31 (database creation flow) will be described with reference to FIG. 6.

FIG. 6 is a flow chart showing database creation processing. As shown in FIG. 6, the vehicle control unit 30 sequentially calculates the gradient information 42 based on the sensor information detected from the sensor unit 20, and the like (S100). Next, the vehicle control unit 30 specifies to which region Ar the position information of the calculated gradient information 42 belongs (S101).

Next, the vehicle control unit 30 determines whether the reliability of the gradient information 42 is high or not when storing the calculated gradient information 42 in the storage unit 40 (S102). When it is determined that the reliability of the gradient information 42 is high (YES in S102), the vehicle control unit 30 stores the gradient information 42 in the storage unit 40 (S103), and the representative value specifying unit 33 calculates (updates) a representative value of the region Ar including the current traveling point and stores the representative value in the storage unit 40 (S104). When it is determined that the reliability of the calculated gradient information 42 is low (NO in S102), the vehicle control unit 30 does not store the gradient information 42 in the storage unit 40 and discards it (S105).

Thereafter, the database creation process is terminated.

Note that, in the present disclosure, the reliability of the entire gradient information 42 is determined, but the reliability of each data of the gradient information 42 may be determined to determine whether to store it in the storage unit 40 or discard it.

<Method for Determining Reliability of Gradient Information>

As described in step S101, when storing the gradient information 42 in the storage unit 40, the vehicle control unit 30 determines whether the reliability of the gradient information 42 is high or not, and may store the gradient information 42 in the storage unit 40 only when the reliability thereof is high.

FIG. 7 is a view for illustrating a method for determining reliability of the gradient information 42. The vertical axis represents frequency, and the horizontal axis represents the height of past gradient information 42, or the magnitude of the gradient.

For example, as shown in FIG. 7, the vehicle control unit 30 may determine reliability based on whether the gradient information 42 intended to be newly stored in the storage unit 40 deviates from the distribution of past gradient information 42 (the height or the magnitude of the gradient) stored in the storage unit 40.

Specifically, the vehicle control unit 30 calculates a deviation of the gradient information 42 intended to be newly stored in the storage unit 40 based on the past gradient information 42. When the deviation is located in a region X equal to or less than a predetermined threshold value, the vehicle control unit 30 determines that the reliability of the gradient information 42 is high and may store the gradient information 42 in the storage unit 40. In addition, if the deviation is located in a region Y exceeding the predetermined threshold value, the vehicle control unit 30 determines that the reliability of the gradient information 42 is low and may not store the gradient information 42 in the storage unit 40.

Thereby, sensor information with low reliability, detected due to false detection by the six-axis sensor 23 or the position sensor 24, can be excluded, and gradient information 42 with high accuracy can be stored.

<Leveling Angle Control Flow>

When the storage unit 40, in which the representative value is stored for the reference position as described above, is used, the calculation time for the target leveling angle $\theta$ described above is shortened. A leveling angle control processing flow will be specifically described with reference to FIG. 8.

FIG. 8 is a flow chart showing leveling angle control processing. As shown in FIG. 8, the vehicle control unit 30 specifies the position information regarding the first point and the advancing direction at the current location based on the sensor information detected from the sensor unit 20, and the like (S200).

Next, the target leveling angle calculation unit 34 determines whether the representative value (inclination angle $\phi$) of the gradient information 42 regarding the region Ar in the advancing direction is stored in the storage unit 40 (S201). When it is determined that the representative value is stored in the storage unit 40 (YES in S201), the target leveling angle calculation unit 34 calculates the target leveling angle $\theta$ based on the representative value in the region corresponding to the advancing direction, stored in the storage unit 40 (S202).

On the other hand, when it is determined that the representative value is not stored in the storage unit 40 (NO in S201), the target leveling angle calculation unit 34 may calculate the target leveling angle $\theta$ based on the inclination angle $\phi$ calculated by the gradient calculation unit 31 (S203).

Next, the target leveling angle calculation unit 34 outputs the calculated target leveling angle $\theta$ to the leveling angle control unit 61. The leveling angle control unit 61 controls the leveling angle to approach the target leveling angle $\theta$ calculated by the target leveling angle calculation unit 34, and controls the operation of the leveling actuator 70 (S204).

Thereafter, the leveling angle control processing is terminated.

According to the above configuration, it is possible to create a database for leveling control that enables shortening of the calculation time for the target leveling angle $\theta$ by reducing a size of data to be stored while effectively utilizing past gradient information.

Note that the target leveling angle $\theta$ of the headlamp 50 at the predetermined first point is calculated based on the road surface angle $\theta r$ at a predetermined second point, which the vehicle 10 reaches after traveling a predetermined time (e.g., 1 second) or a predetermined distance (e.g., 10 m) from the first point. For the road surface angle $\theta r$ at the predetermined second point, a representative value of the gradient information 42 stored in the storage unit 40 is used. In addition, when the representative value of the gradient information 42 at the predetermined second point is not stored in the storage unit 40, the road surface angle $\theta r$ at the predetermined second point calculated by the road surface angle calculation unit 32 may be used. Note that the predetermined first point and the predetermined second point are located in the advancing direction of the vehicle 10.

Note that, although the configuration has been described in which it is sequentially determined to which region Ar the position information of the gradient information 42 calculated by the gradient calculation unit 31 belongs and a representative value is set, the present disclosure is not limited thereto.

The system 100 may also be configured to include an external data server connected to the vehicle control unit 30 via wireless communication, to store all the gradient information 42 sequentially calculated in the external data server, and to calculate a representative value for the reference position based on the gradient information 42 sequentially acquired by the data server. In this case, the external data server wirelessly transmits the calculated representative value for the reference position to the storage unit 40 mounted on the vehicle 10. With this configuration, the calculation of the representative value for the reference position, which requires a large computational load, can be processed outside the vehicle, so that the database installed in the vehicle 10 can be kept compact.

In addition, in the format of the gradient information 42 shown in FIG. 3, the road surface angle $\theta r$ may be included instead of the inclination angle $\phi$. In this case, the target leveling angle calculation unit 34 calculates the inclination angle $\phi$ by summing the road surface angle $\theta r$ and the vehicle angle $\theta v$, and calculates the target leveling angle based on the

calculated inclination angle $\phi$.

<Configuration of Leveling Angle Control System 1100>

FIG. 9 is a block diagram showing an example of a configuration of a leveling angle control system 1100 (hereinafter, also referred to simply as "system 1100") according to a second embodiment of the present disclosure. The system 1100 is a system that controls a leveling angle at a predetermined first point ahead of a current traveling point based on a road surface angle at a point ahead of the current traveling point of a vehicle 1010.

The system 1100 is a system that controls a leveling angle of a headlamp 1050 for a vehicle. The system 1100 includes, for example, the vehicle 1010 and the headlamp 1050.

The vehicle 1010 includes, for example, a sensor unit 1020, a vehicle control unit 1030, and a storage unit (database) 1040. Note that the sensor unit 1020 may also be provided in the headlamp 1050. Additionally, the storage unit 1040 may also be provided in the headlamp 1050 or may also be configured to be provided outside the vehicle 1010 (e.g., in a data center communicatively connectable to the vehicle 1010).

The sensor unit 1020 includes, for example, a camera 1021, a LiDAR 1022, a six-axis sensor 1023, and a position sensor 1024. The camera 1021 is provided to be capable of capturing at least a region ahead of the vehicle 1010. The LiDAR 1022 is provided to be capable of acquiring an image of at least a region ahead of the vehicle 1010.

The six-axis sensor 1023 is, for example, a six-axis acceleration sensor that detects acceleration and angular velocity in each direction of an x-axis, a y-axis, and a z-axis orthogonal to each other. The six-axis sensor 1023 is attached to the vehicle 1010 such that, for example, the x-axis aligns with an axis in a front-rear direction of the vehicle 1010, the y-axis aligns with an axis in a left-right direction of the vehicle 1010, and the z-axis aligns with an axis in an upper-lower direction of the vehicle 1010.

The position sensor 1024 is a sensor that detects position information of the vehicle 1010, and is for example, a GPS sensor or a GNSS sensor.

Data obtained by the camera 1021, the LiDAR 1022, the six-axis sensor 1023, and the position sensor 1024 is output to the vehicle control unit 1030.

The vehicle control unit 1030 includes a gradient calculation unit 1031, a road surface angle calculation unit 1032, a representative value specifying unit 1033, and a target leveling angle calculation unit 1034.

The vehicle control unit 1030 controls various operations of the vehicle 1010, such as traveling. The lamp control unit 1030 includes a processor, such as an ASIC, an FPGA, or a general-purpose CPU. In addition, although not shown, the vehicle 1010 includes, for example, a ROM in which various vehicle control programs are stored, and a RAM in which various vehicle control data is temporarily stored. The processor of the vehicle control unit 1030 can develop data designated from various vehicle control programs stored in the ROM onto the RAM and control various operations of the vehicle 1010 in cooperation with the RAM.

The headlamp 1050 is mounted on the vehicle 1010 and irradiates a region ahead of the vehicle 1010 with light. The headlamp 1050 includes, for example, a light source unit that emits light, a leveling actuator 1070, and a lamp control unit 1060 that controls the light source unit and the leveling actuator 1070.

The lamp control unit 1060 includes a leveling angle control unit 1061. The lamp control unit 1060 includes a processor, such as an ASIC, an FPGA, or a general-purpose CPU. In addition, although not shown, the vehicle 1060 includes, for example, a ROM in which various control programs are stored, and a RAM in which various vehicle control data is temporarily stored. The processor of the lamp control unit 1060 can develop data designated from various control programs stored in the ROM onto the RAM and control various operations of the headlamp 1050 in cooperation with the RAM.

The leveling angle control unit 1061 controls a leveling angle of the headlamp 1050 via the leveling actuator 1070.

Incidentally, there is a case where time is required after the leveling actuator 1070 provided in the headlamp 1050 starts operating until the leveling angle reaches a target value (target leveling angle $\theta$).

For example, there is a case where about 0.1 to 0.5 second is required after the target leveling angle $\theta$ is calculated until the leveling angle actually reaches the target leveling angle $\theta$. Alternatively, the light source of the headlamp 1050 may be composed of a plurality of LEDs, and the leveling angle may be controlled in a pseudo manner by controlling on and off states of each LED. Even in this case, about 0.1 to 0.5 second may be required after the target leveling angle $\theta$ is calculated until the leveling angle actually reaches the target leveling angle $\theta$. As such, a delay time occurs after the leveling actuator 1070 starts operating until the leveling angle reaches a target leveling angle $\theta$.

For this reason, even starting the operation of the leveling actuator 1070 at the current traveling point is too late, as the leveling angle is set to a predetermined value based on a gradient of the road surface at the current traveling point of the vehicle 1010. Therefore, in the system 1100 of the present disclosure, when the vehicle reaches the current traveling point, control is initiated to achieve the target leveling angle $\theta$ based on a gradient of the road surface at a certain point (referred to as a first point in the following description) ahead of the current traveling point, thereby controlling the leveling angle so that an appropriate leveling angle is achieved when the vehicle 1010 reaches the first point.

To realize such control, the leveling angle control unit 1061 operates based on various inputs from the vehicle control unit 1030.

<Method for Creating Database>

Incidentally, in the system 1100 according to the second embodiment of the present disclosure, each data of the gradient information 1042 is acquired by the six-axis sensor 1023 and position sensor 1024 of the sensor unit 1020, and is used when calculating the target leveling angle $\theta$ as described above. The vehicle control unit 1030 acquires sensor information every predetermined time, such as every millisecond, while the vehicle 1010 is traveling, and stores it in the storage unit 1040 in association with a detection time, as shown in FIG. 10. In the second embodiment of the present disclosure, as shown in FIG. 10, for groups of data sets, each including detection time, position information (North latitude and East longitude), height, roll angle, pitch angle, yaw angle, road surface angle, advancing direction, and weight coefficient W, a gradient information ID to make each group of data sets identifiable is assigned. The gradient information ID and the one group of data sets are collectively referred to as the gradient information 1042.

The gradient calculation unit 1031 calculates the roll angle based on an output of angular acceleration around the X-axis of the six-axis sensor 1023 and stores it in the storage unit 1040. In addition, the gradient calculation unit 1031 calculates the advancing direction based on a difference between the position information at the current time and the position information at the previous detection time.

If the sensor information is acquired as described in the method for calculating the inclination angle described above and the gradient information 1042 is calculated using the acquired sensor information as it is, the accuracy of the gradient information 1042 to be calculated may decrease because the acquired sensor information has variations. As a result, the accuracy of the leveling angle to be controlled decreases.

Therefore, the system 1100 according to the second embodiment of the present disclosure calculates a normal distribution of a plurality of pieces of gradient information 1042 calculated in the past within a region Ar including a current traveling point, calculates a probability density P in the normal distribution of the gradient information 1042 to be newly calculated, and stores the calculated probability density P as a weight coefficient W.

In addition, the system 1100 according to the second embodiment of the present disclosure does not store the gradient information 1042 for all positions on the map, but sets a reference position on the map and stores a representative value 1043 in association with the reference position. The representative value set for the reference position is a value set based on a plurality of pieces of gradient information 1042 within a region Ar including at least one reference position.

The reference position and the representative value 1043 will be described with reference to FIGS. 11 and 12. FIG. 11 is a conceptual view for illustrating map information 1041 according to the second embodiment of the present disclosure. As shown in FIG. 11, in the map information 1041, a map for vehicle traveling is divided into a plurality of regions Ar by a grid Gr. Each region Ar is associated with the gradient information 1042 including the road surface angle $\theta r$ of the vehicle 1010 calculated by the gradient calculation unit 1031 during past traveling. In addition, a representative value specified based on the plurality of pieces of gradient information 1042 by the representative value specifying unit 1033 is associated with the reference position.

FIG. 12 shows a format of the representative value 1043 of the gradient information 1042 stored in the storage unit 1040. As shown in FIG. 12, a representative value 1043 of a certain region Ar is set based on the plurality of pieces of gradient information 1042 shown in FIG. 11, a region ID indicating the region Ar is attached, and the representative value 1043 of the plurality of pieces of gradient information 1042 regarding each region Ar is created as one database and stored in the storage unit 1040. When the representative value 1043 of the region Ar is created, the gradient information 1042 regarding the region Ar may be transferred from the storage unit 1040 to an external data server or the like connected via wireless communication to the vehicle control unit 1030, and only the representative value 1043 may be stored in the storage unit 1040. Thereby, the database installed in the vehicle 1010 can be kept compact, enabling shortening of the calculation time for calculating the target leveling angle $\theta$.

In addition, when setting the representative value 1043 of a certain region Ar, each parameter of the gradient information 1042 corresponding to the representative value 1043 may be calculated by multiplying each parameter of the plurality of pieces of gradient information 1042 by the weight coefficient W, summing the resulting values, and dividing the summed value by a sum of the weight coefficients W.

Note that the reference position may be, for example, a center point of each region Ar. In addition, the reference position is not limited to one in each region Ar and may also be provided in multiples.

In addition, the plurality of regions Ar divided by the grid Gr may be variable regions corresponding to the number of pieces of gradient information 1042. By making the plurality of regions Ar variable regions, the range of the regions can be varied in response to the road environment at the traveling point of the vehicle 1010, thereby improving the accuracy of the gradient information 1042 to be referred to.

For example, if the number of pieces of gradient information 1042 included in a certain region Ar is equal to or less than a predetermined value, the region Ar may be enlarged to increase the number of pieces of gradient information 1042 to be referred to. In addition, for example, if a variance of the gradient information 1042 included in a certain region Ar is equal to or greater than a predetermined value, the region Ar may be enlarged to increase the number of pieces of gradient information 1042 to be referred to, thereby reducing the variance of the gradient information 1042.

In addition, the map for vehicle traveling may be divided into a plurality of circular regions rather than the grid Gr.

In addition, as shown in FIG. 12, the current position and current advancing direction of the vehicle 1010 can be specified from the position information and advancing direction of the gradient information ID at the latest detection time in the gradient information 1042 shown in FIG. 11.

The representative value specifying unit 1033 specifies the reference position in each divided region of the map information 1041 and the representative value 1043 of the gradient information 1042 from the map information 1041 stored in the storage unit 1040 and the gradient information 1042 associated with the map information 1041. The representative value specifying unit 1033 may specify, for example, an average value or median value of the plurality of pieces of gradient information 1042 in each region, as the representative value 1043. In addition, the representative value 1043 is not limited to one in each region and may be provided in multiples. The vehicle control unit 1030 stores the specific value specified by the representative value specifying unit 1033 in the storage unit 1040 in association with the map information 1041.

<Method for Storing Gradient Information>

A method for storing the gradient information 1042 by the gradient calculation unit 1031 (database creation flow) will be described with reference to FIG. 13.

FIG. 13 is a flow chart showing database creation processing. As shown in FIG. 13, the vehicle control unit 1030 sequentially calculates the gradient information 1042 based on the sensor information detected from the sensor unit 1020, and the like (S1100). Next, the vehicle control unit 1030 specifies to which region Ar the position information of the calculated gradient information 1042 belongs (S1101).

Next, the vehicle control unit 1030 calculates the probability density P (weight coefficient W) of the newly calculated gradient information 1042 from the normal distribution of the gradient information 1042 calculated in the past (S1102). It is determined whether the calculated weight coefficient W is equal to or greater than a predetermined threshold value Th (S1103). When it is determined that the weight coefficient W is equal to or greater than the predetermined threshold value Th (YES in S1103), the vehicle control unit 1030 stores the gradient information 1042 including the weight coefficient W in the storage unit 1040 (S1104), and the representative value specifying unit 1033 calculates (updates) the representative value 1043 of the region Ar including the current traveling point, and stores the representative value 1043 in the storage unit 1040 (S1105). When it is determined that the weight coefficient W is smaller than the predetermined threshold value Th (NO in S1103), the vehicle control unit 1030 does not store the newly calculated gradient information 1042 in the storage unit 1040 and discards it (S1106). Thereafter, the database creation process is terminated.

Note that in the second embodiment of the present disclosure, the weight coefficient W of the entire gradient information 1042 is defined, but the weight coefficient W may be defined for each data of the gradient information 1042, and it may be determined whether to store the gradient information in the storage unit 1040 or discard it by determining for each data whether the weight coefficient W is equal to or greater than the predetermined threshold value Th.

<Method for Calculating Weight Coefficient of Gradient Information>

As described in step S1103, when storing the gradient information 1042 in the storage unit 1040, the vehicle control unit 1030 determines whether the weight coefficient W is equal to or greater than the predetermined threshold value Th, and may store the gradient information 1042 in the storage unit 1040 only when it is determined that the weight coefficient W is equal to or greater than the predetermined threshold value Th.

FIG. 14 is a view for illustrating a method for calculating the weight coefficient W of the gradient information 1042. The vertical axis represents the probability density P (weight coefficient W), and the horizontal axis represents the height of the past gradient information 1042, or the magnitude of the gradient.

For example, as shown in FIG. 14, the vehicle control unit 1030 calculates a deviation of the weight coefficient W of the gradient information 1042 intended to be newly stored in the storage unit 1040, based on the past gradient information 1042. For example, for the gradient information 1042 intended to be newly stored in the storage unit 1040, if the deviation of the weight coefficient W is located in a region X equal to or less than the predetermined threshold value Th, as in D1 of FIG. 14, the vehicle control unit 1030 may determine that the accuracy of the gradient information 1042 is high and store the gradient information 1042 in the storage unit 1040. In addition, for example, if the deviation of the weight coefficient W is located in a region Y exceeding the predetermined threshold value Th, as in D2 of FIG. 14, the vehicle control unit 1030 may determine that the accuracy of the gradient information 1042 is low and may not store the gradient information 1042 in the storage unit 1040. Note that since the vertical axis of the graph of FIG. 14 represents the probability density P (weight coefficient W), the integral value becomes 1 when the entire graph is integrated.

Thereby, sensor information with low reliability, detected due to false detection by the six-axis sensor 1023 or the position sensor 1024, can be excluded, and gradient information 1042 with high accuracy can be stored.

<Leveling Angle Control Flow>

When the storage unit 1040, in which the representative value 1043 is stored for the reference position as described above, is used, the calculation time for the target leveling angle θ described above is shortened. A leveling angle control processing flow will be specifically described with reference to FIG. 15.

FIG. 15 is a flow chart showing leveling angle control processing. As shown in FIG. 15, the vehicle control unit 1030 assigns weights to the sensor information detected from the sensor unit 1020, and the like by the weight coefficient W and specifies the position information regarding the first point and the advancing direction at the current location based on the weighted sensor information and the like (S1200).

Next, the target leveling angle calculation unit 1034 determines whether the representative value 1043 (inclination angle ϕ) of the gradient information 1042 regarding the region Ar in the advancing direction is stored in the storage unit 1040 (S1201). When it is determined that the representative value 1043 is stored in the storage unit 1040 (YES in S1201), the target leveling angle calculation unit 1034 calculates the target leveling angle θ based on the representative value 1043 in the region corresponding to the advancing direction, stored in the storage unit 1040 (S1202).

On the other hand, when it is determined that the representative value 1043 is not stored in the storage unit 1040 (NO in S1201), the target leveling angle calculation unit 1034 may assign a weight to the inclination angle ϕ calculated by the gradient calculation unit 1031 with the weight coefficient W and calculate the target leveling angle θ based on the weighted inclination angle ϕ (S1203).

Next, the target leveling angle calculation unit 1034 outputs the calculated target leveling angle θ to the leveling angle control unit 1061. The leveling angle control unit 1061 controls the operation of the leveling actuator 1070 to approach the target leveling angle θ calculated by the target leveling angle calculation unit 1034 (S1204).

Thereafter, the leveling angle control processing is terminated.

According to the above configuration, it is possible to create a database for leveling control that enables high-accuracy leveling control by effectively utilizing past gradient information.

Note that the target leveling angle θ of the headlamp 1050 at the predetermined first point is calculated based on the road surface angle θr at a predetermined second point, which the vehicle 1010 reaches after traveling a predetermined time (e.g., 1 second) or a predetermined distance (e.g., 10 m) from the first point. For the road surface angle θr at the predetermined second point, the representative value 1043 of the gradient information 1042 stored in the storage unit 1040 is used. In addition, when the representative value 1043 of the gradient information 1042 at the predetermined second point is not stored in the storage unit 1040, the road surface angle θr at the predetermined second point calculated by the road surface angle calculation unit 1032 may be used. Note that the predetermined first point and the predetermined second point are located in the advancing direction of the vehicle 1010.

Note that, although the configuration has been described in which it is sequentially determined to which region Ar the position information of the gradient information 1042 calculated by the gradient calculation unit 1031 belongs and the representative value 1043 is set, the present disclosure is not limited thereto.

The system 1100 according to the second embodiment of the present disclosure may also be configured to include an external data server connected to the vehicle control unit 1030 via wireless communication, to store all the gradient information 1042 sequentially calculated in the external data server, and to calculate the representative value 1043 for the reference position based on the gradient information 1042 sequentially acquired by the data server. In this case, the external data server wirelessly transmits the calculated representative value 1043 for the reference position to the storage unit 1040 mounted on the vehicle 1010. With this configuration, the calculation of the representative value 1043 for the reference position, which requires a large computational load, can be processed outside the vehicle, so that the database installed in the vehicle 1010 can be kept compact.

In addition, in the format of the gradient information 1042 shown in FIG. 10, the road surface angle θr may be included instead of the inclination angle ϕ. In this case, the target leveling angle calculation unit 1034 calculates the inclination angle ϕ by summing the road surface angle θr and the vehicle angle θv, and calculates the target leveling angle based on the calculated inclination angle ϕ.

<Configuration of Leveling Angle Control System 2100>

FIG. 16 is a block diagram showing an example of a configuration of a leveling angle control system 2100 (hereinafter, also referred to simply as "system 2100") according to a third embodiment of the present disclosure. The system 2100 is a system that controls a leveling angle at a predetermined first point ahead of a current traveling point based on a road surface angle at a point ahead of the current traveling point of a vehicle 2010.

The system 2100 is a system that controls a leveling angle of a vehicle headlamp 2050. The system 2100 includes, for example, the vehicle 2010 and the headlamp 2050.

The vehicle 2010 includes, for example, a camera 2021, a LiDAR 2022, a six-axis sensor 2023, and a position sensor 2024. The camera 2021 is provided to be capable of capturing at least the front of the vehicle 2010. The LiDAR 2022 is provided to be capable of acquiring an image of at least the front of the vehicle 2010.

The six-axis sensor 2023 is, for example, a six-axis acceleration sensor that detects acceleration and angular velocity in each direction of an x-axis, a y-axis, and a z-axis orthogonal to each other. The six-axis sensor 2023 is attached to the vehicle 2010 such that, for example, the x-axis aligns with an axis in a front-rear direction of the vehicle 2010, the y-axis aligns with an axis in a left-right direction of the vehicle 2010, and the z-axis aligns with an axis in an upper-lower direction of the vehicle 2010.

The position sensor 2024 is a sensor that detects position information of the vehicle 2010, and is for example, a GPS sensor or a GNSS sensor.

Data obtained by the camera 2021, the LiDAR 2022, the six-axis sensor 2023, and the position sensor 2024 is output to the vehicle control unit 2030.

The vehicle control unit 2030 includes a gradient calculation unit 2031, an advancing direction estimation unit 2032, a determination unit 2033, and a target leveling angle calculation unit 2034.

The vehicle control unit 2030 controls various operations of the vehicle 2010, such as traveling. The lamp control unit 2030 includes a processor, such as an ASIC, an FPGA, or a general-purpose CPU. In addition, although not shown, the vehicle 2010 includes, for example, a ROM in which various vehicle control programs are stored, and a RAM in which various vehicle control data is temporarily stored. The processor of the vehicle control unit 2030 can develop data designated from various vehicle control programs stored in the ROM onto the RAM and control various operations of the vehicle 2010 in cooperation with the RAM.

The headlamp 2050 is mounted on the vehicle 2010 and irradiates a region ahead of the vehicle 2010 with light. The headlamp 2050 includes, for example, a light source unit that emits light, a leveling actuator 2070, and a lamp control unit 2060 that controls the light source unit and the leveling actuator 2070.

The lamp control unit 2060 includes a leveling angle control unit 2061. The lamp control unit 2060 includes a processor, such as an ASIC, an FPGA, or a general-purpose CPU. In addition, although not shown, the vehicle 2060 includes, for example, a ROM in which various control programs are stored, and a RAM in which various vehicle control data is temporarily stored. The processor of the lamp control unit 2060 can develop data designated from various control programs stored in the ROM onto the RAM and control various operations of the headlamp 2050 in cooperation with the RAM.

The leveling angle control unit 2061 controls a leveling angle of the headlamp 2050 via the leveling actuator 2070.

Incidentally, there is a case where time is required after the leveling actuator 2070 provided in the headlamp 2050 starts operating until the leveling angle reaches a target value (target leveling angle $\theta$).

For example, there is a case where about 0.1 to 0.5 second is required after the target leveling angle $\theta$ is calculated until the leveling angle actually reaches the target leveling angle $\theta$. Alternatively, the light source of the headlamp 2050 may be composed of a plurality of LEDs, and the leveling angle may be controlled in a pseudo manner by controlling on and off states of each LED. Even in this case, bout 0.1 to 0.5 second may be required after the target leveling angle $\theta$ is calculated until the leveling angle actually reaches the target leveling angle $\theta$. As such, a delay time occurs after the leveling actuator 2070 starts operating until the leveling angle reaches a target leveling angle $\theta$.

For this reason, even starting the operation of the leveling actuator 2070 at the current traveling point is too late, as the leveling angle is set to a predetermined value based on the gradient of the road surface at the current traveling point of the vehicle 2010. Therefore, in the system 2100 according to the third embodiment of the present disclosure, when the vehicle reaches the current traveling point, control is initiated to achieve the target leveling angle $\theta$ based on a gradient of the road surface at a certain point (referred to as a first point in the following description) ahead of the current traveling point, thereby controlling the leveling angle so that an appropriate leveling angle is achieved when the vehicle 2010 reaches the first point.

To realize such control, the leveling angle control unit 2061 operates based on various inputs from the vehicle control unit 2030.

<Leveling Angle Control Method According to Reference Example>

Before describing the leveling angle control method according to the third embodiment of the present disclosure, a leveling angle control method according to a reference example different from the third embodiment of the present disclosure will be described.

A leveling angle control method of a vehicle 2010 according to the reference example will be described with reference to FIG. 17.

FIG. 17 is a conceptual view showing the target leveling angle $\theta$ and an actual leveling angle when the vehicle 2010 is traveling on a road surface.

As shown in (a) of FIG. 17, when the vehicle 2010 is traveling on a flat road surface, the leveling angle of the headlamp 2050 is set such that a center point of a light distribution pattern (point O where an H line and a V line intersect) is positioned, for example, 70 m ahead of the vehicle 2010. For example, the leveling angle at this time (indicated by a line H2 in FIG. 17) is tilted downward by about 0.5 degree with respect to a horizontal direction (indicated by a line H1 in FIG. 17). In the following description, the angle tilted downward by 0.5 degree with respect to the horizontal direction during traveling on the flat road surface is referred to as a reference leveling angle of the headlamp 2050, and the leveling angle of the headlamp 2050 is expressed as an angle deviating from the reference leveling angle.

Note that the reference leveling angle has different values depending on the attachment height of the headlamp 2050 to the vehicle 2010, laws and regulations, and the like. '0.5 degree' is just a number used for specific description.

Basically, the leveling angle of the headlamp 2050 is set to an angle corresponding to an angle of the road surface on which the vehicle 2010 is traveling. For example, when the road surface ahead of the vehicle slopes downward as shown in (b) of FIG. 17 (the road surface angle is negative), the irradiation reference point will be positioned farther than 70 m ahead of the vehicle 2010 if the reference leveling angle is maintained. Therefore, by tilting the leveling angle further downward than the reference leveling angle, as indicated by a line H3, the irradiation reference point is positioned 70 m ahead of the vehicle 2010.

In the leveling angle control method according to the reference example, the target leveling angle calculation unit 2034 calculates the target leveling angle $\theta$ of the headlamp 2050 based on the gradient information 2042 at the first point determined according to the current position and traveling direction of the vehicle 2010.

FIG. 18 is a conceptual view for illustrating a predicted advancing direction. For example, as shown in FIG. 18, the advancing direction estimation unit 2032 specifies a current traveling point of the vehicle 2010 based on the sensor information detected by the position sensor 2024. Additionally, the advancing direction estimation unit 2032 estimates a predicted advancing direction of the vehicle 2010 based on a difference between the position information at the current time and the position information at the previous detection time. Additionally, the advancing direction estimation unit 2032 specifies a predetermined point (first point) ahead of the vehicle 2010 and a reference region Ar of the gradient information 2042 based on the current traveling point and the predicted advancing direction.

Additionally, the target leveling angle calculation unit 2034 reads out the gradient information 2042 at the first point stored in the storage unit 2040. FIG. 19 shows a format of the gradient information 2042 according to the reference example. As shown in FIG. 19, the storage unit 2040 stores position information and an inclination angle $\phi$ at that position. Therefore, the target leveling angle calculation unit 2034 specifies the inclination angle $\phi$ at a position corresponding with the first point or at a position closest to the first point.

The target leveling angle calculation unit 2034 calculates the target leveling angle $\theta$ at the first point based on the specified inclination angle $\phi$ at the first point. The vehicle control unit 2030 outputs the calculated target leveling angle $\theta$ to the lamp control unit 2060, and the leveling angle control unit 2061 of the lamp control unit 2060 controls the leveling angle to correspond with the input target leveling angle $\theta$.

Note that the exemplified reference region Ar is a circular region centered on the first point, but may also be a single region divided by a grid.

Additionally, the reference region Ar may be a variable region corresponding to the number of the pieces of gradient information 2042. By making the reference region Ar a variable region, the range of the region can be varied in response to the road environment at the traveling point of the vehicle 2010, thereby improving the accuracy of the gradient information 2042 to be referred to. For example, if the number of pieces of gradient information 2042 included in the reference region Ar is equal to or less than a predetermined value, the reference region Ar may be enlarged to increase the number of pieces of gradient information 2042 to be referred to.

The target leveling angle calculation unit 2034 reads out the gradient information 2042 at the first point stored in the storage unit 2040. As shown in FIG. 19, the gradient information 2042 stores the position information and the inclination angle $\phi$ at that position. Therefore, the target leveling angle calculation unit 2034 specifies the inclination angle $\phi$ at a position corresponding with the first point in the reference region Ar or at a position closest to the first point.

<Gradient Information Format>

Incidentally, in the system 2100 according to the third embodiment of the present disclosure, each data of the gradient information 2042 is acquired by the six-axis sensor 2023 and position sensor 2024 of the sensor unit 2020, and is used when calculating the target leveling angle $\theta$ as described above. The vehicle control unit 2030 acquires sensor information every predetermined time, such as every millisecond while the vehicle 2010 is traveling, and stores it in the storage unit 2040 in association with the detection time.

FIG. 20 is a view showing a format of the gradient information 2042 according to the third embodiment of the present disclosure. In the present disclosure, as shown in FIG. 20, for groups of data sets, each including detection time, position information (North latitude and East longitude), inclination angle $\phi$, and advancing direction information 2043, a gradient information ID to make each group of data sets identifiable is assigned. The gradient information ID and the one group of data sets are collectively referred to as the gradient information 2042.

<Leveling Angle Control Method and System of Present Disclosure>

Incidentally, in the leveling angle control method according to the reference example, the gradient information 2042 stored in the storage unit 2040 may include the gradient information 2042 calculated and acquired by traveling along a route different from the route along which the current vehicle 2010 has traveled. Since the inclination angle of the vehicle 2010 also varies when the traveling route differs, such gradient information 2042 may have low accuracy. Accordingly, there is an issue in that if the target leveling angle θ of the headlamp 2050 is calculated using the inclination angle ϕ of the gradient information 2042 calculated and acquired by traveling along a different route, as it is, the accuracy of the leveling angle to be controlled may decrease.

Therefore, when the gradient calculation unit 2031 calculates the gradient information 2042 and stores it in advance in the storage unit 2040, the system 2100 according to the third embodiment of the present disclosure stores the advancing direction information 2043 estimated by the advancing direction estimation unit 2032 in advance in the storage unit 2040 in association with the gradient information 2042. As shown in FIG. 19, in addition to the position information and the inclination angle ϕ at that position, the advancing direction information is stored in the storage unit 2040. In addition, when calculating the target leveling angle θ, the target leveling angle calculation unit 2034 refers to the gradient information 2042 associated with the advancing direction information 2043 if the current predicted advancing direction of the vehicle 2010 estimated by the advancing direction estimating unit 2032 corresponds with the advancing direction information 2043 stored in the storage unit 2040.

FIG. 21 is a conceptual view for illustrating a method for referring to the gradient information 2042.

The determination unit 2033 determines whether the predicted advancing direction estimated by the advancing direction estimation unit 2032 corresponds with the advancing direction information 2043 associated with the gradient information 2042 (referred to as the first gradient information) at a position closest to the first point. In the example of FIG. 21, since both do not correspond with each other, the target leveling angle calculation unit 2034 does not refer to the first gradient information.

In addition, the determination unit 2033 determines whether the predicted advancing direction estimated by the advancing direction estimation unit 2032 corresponds with the advancing direction information 2043 associated with the gradient information 2042 (referred to as the second gradient information) at a second closest position to the first point. In the example of FIG. 21, since both correspond with each other, the target leveling angle calculation unit 2034 refers to the second gradient information, and calculates and sets the target leveling angle θ of the headlamp 2050.

In other words, when the vehicle 2010 has traveled along a predetermined route in the past and the vehicle 2010 travels along the predetermined route again, the target leveling angle θ of the headlamp 2050 is set to the same value as the leveling angle during a past traveling along the predetermined route.

Thereby, high-accuracy leveling control can be performed based on the gradient information 2042 calculated and acquired by traveling along the same route as the current route along which the vehicle 2010 has traveled.

Note that the advancing direction estimation unit 2032 may convert the estimated predicted advancing direction and the advancing direction information 2043 into predicted advancing azimuth and advancing azimuth information including, for example, 16 orientations. In this case, the advancing direction estimation unit 2032 stores the advancing azimuth information, instead of the advancing direction information 2043, in advance in the storage unit 2040 in association with the gradient information 2042. The determination unit 2033 determines whether the converted predicted advancing azimuth and the advancing direction information correspond with each other. If both are determined to correspond with each other, the determination unit 2033 determines that the predicted advancing direction and the advancing direction information 2043 correspond with each other.

Thereby, by converting the predicted advancing direction and the advancing direction information 2043 into 16 orientations or the like to reduce the data size, the amount of data to be stored in the storage unit 2040 can be reduced, enabling the database installed in the vehicle 2010 to be kept compact.

Note that when estimating the predicted advancing direction, the advancing direction estimation unit 2032 may also estimate a predicted speed of the vehicle 2010. In this case, the advancing direction estimation unit 2032 stores, in addition to the advancing direction information 2043, the estimated predicted speed as speed information in advance in the storage unit 2040 in association with the gradient information 2042. Additionally, the determination unit 2033 determines whether the predicted advancing direction and the advancing direction information 2043 correspond with each other, and whether the predicted speed and the speed information correspond with each other. When it is determined that the predicted advancing direction and the advancing direction information 2043 correspond with each other, and that the predicted speed and the speed information correspond with each other, the target leveling angle calculation unit 34 sets the target leveling angle θ based on the gradient information 2042 associated with the advancing direction information 2043 and the speed information.

Thereby, high-accuracy leveling control can be performed based on the gradient information 2042 calculated and acquired by traveling along the same route as the current route along which the vehicle 2010 has traveled and at substantially the same speed.

When the advancing direction information 2043 associated with the gradient information 2042 as described above is used, the accuracy of the target leveling angle θ is improved. A leveling angle control processing flow will be specifically described with reference to FIG. 22.

FIG. 22 is a flow chart showing leveling angle control processing. As shown in FIG. 22, first, the advancing direction estimation unit 2032 specifies the current traveling point of the vehicle 2010 based on the sensor information detected by the position sensor 2024, and estimates the predicted advancing direction of the vehicle 2010 based on the difference between the position information at the current time and the position information at the previous detection time (S2100). Next, the advancing direction estimation unit 2032 specifies a predetermined point (first point) ahead of the vehicle 2010 and a reference region Ar based on the current traveling point and the predicted advancing direction (S2101).

Next, the target leveling angle calculation unit 2034 determines whether the gradient information 2042 regarding the reference region Ar in the advancing direction is stored in the storage unit 2040 (S2102). When it is determined that the gradient information 2042 is stored in the storage unit 2040 (YES in S2102), the determination unit 2033 refers to the gradient information 2042 (first gradient information) at the position (i=1) closest to the first point (S2103), and determines whether the predicted advancing direction estimated by the advancing direction estimation unit 2032 corresponds with the advancing direction information 2043 associated with the first gradient information (S2104).

When it is determined that the predicted advancing direction estimated by the advancing direction estimation unit 2032 corresponds with the advancing direction information 2043 associated with the first gradient information (Yes in S2104), the target leveling angle calculation unit 2034 refers to the first gradient information and calculates the target leveling angle θ of the headlamp 2050 (S2105).

When it is determined that the predicted advancing direction estimated by the advancing direction estimation unit 2032 does not correspond with the advancing direction information 2043 associated with the first gradient information (No in S2104), the target leveling angle calculation unit 2034 does not refer to the first gradient information. In this case, the determination unit 2033 refers to the gradient information 2042 (second gradient information) at the second closest position (i=2) to the first point (S2103), and determines whether the predicted advancing direction estimated by the advancing direction estimation unit 2032 corresponds with the advancing direction information 2043 associated with the second gradient information (S2104). Steps S2103 and S2104 are repeated until the predicted advancing direction estimated by the advancing direction estimation unit 2032 corresponds with the advancing direction information 2043 associated with the gradient information 2042.

Thereafter, the leveling angle control processing is terminated.

According to the above configuration, it is possible to create a database for leveling control that enables high-accuracy leveling control by effectively utilizing past gradient information.

Note that the target leveling angle θ of the headlamp 2050 at the predetermined first point is calculated based on the road surface angle θr at a predetermined second point, which the vehicle 2010 reaches after traveling a predetermined time (e.g., 1 second) or a predetermined distance (e.g., 10 m) from the first point. For the road surface angle θr at a predetermined second point, a representative value of the gradient information 2042 stored in the storage unit 2040 is used. In addition, when the representative value of the gradient information 2042 at the predetermined second point is not stored in the storage unit 2040, the road surface angle θr at the predetermined second point calculated by the determination unit 2033 may be used. Note that the predetermined first point and the predetermined second point are located in the advancing direction of the vehicle 2010.

Note that although the configuration has been described in which, when calculating the gradient information 2042, the advancing direction information 2043 estimated by the advancing direction estimation unit 2032 is stored in advance in the storage unit 2040 in association with the gradient information 2042, the present disclosure is not limited thereto.

The system 2100 according to the third embodiment of the present disclosure may also be configured to include an external data server connected to the vehicle control unit 2030 via wireless communication, and to store all the gradient information 1042 sequentially calculated and the advancing direction information 2043 sequentially estimated in the external data server, and the vehicle control unit 2030 may be configured to additionally include an advancing direction receiving unit. In this case, the advancing direction receiving unit receives the advancing direction information 2043 associated with the gradient information 2042 at the position closest to the first point from the external data server, and the determination unit 2033 determines whether the estimated predicted advancing direction corresponds with the advancing direction information 2043 received by the advancing direction receiving unit. With this configuration, the database installed in the vehicle 2010 can be kept compact.

In addition, the predicted advancing direction and the advancing direction information 2043 may include information about the vehicle 2010 (e.g., vehicle type, etc.), and the determination unit 2033 may determine whether the information about the vehicle 2010 included in the predicted advancing direction corresponds with the information about the vehicle 2010 included in the advancing direction information 2043. Thereby, a vehicle having common information (e.g., vehicle type, etc.) about the vehicle 2010 can calculate and acquire the gradient information 2042 by having traveled in the past along the same route as the current route along which the vehicle 2010 has traveled, and perform high-accuracy leveling control based on the gradient information 2042.

In addition, in the format of the gradient information 2042 shown in FIG. 19, the road surface angle $\theta r$ may be included instead of the inclination angle $\phi$. In this case, the target leveling angle calculation unit 2034 calculates the inclination angle $\phi$ by summing the road surface angle $\theta r$ and the vehicle angle $\theta v$, and calculates the target leveling angle based on the calculated inclination angle $\phi$.

In addition, in the flow chart shown in FIG. 22, the method for determining whether the advancing direction corresponds with sequentially from the gradient information closest to the first point among the gradient information belonging to the region Ar has been described, but the present disclosure is not limited thereto. In the present disclosure, the target leveling angle may be calculated based on the inclination angle of the gradient information close to the first position and also close to the advancing direction of the vehicle 2010. For example, a composite index, which integrates an index representing a difference between the position information of the gradient information and the position information at the first point and an index representing a difference between the advancing direction of the gradient information and the advancing direction of the vehicle 2010, may be calculated for each piece of gradient information within the region Ar, and the target leveling angle may be calculated based on the inclination angle of the gradient information having the smallest composite index.

Although the embodiments of the present disclosure have been described, it goes without saying that the technical scope of the present disclosure should not be construed as being limited by the descriptions of the present embodiments. It is understood by one skilled in the art that the present embodiments are just examples and the embodiments can be variously changed within the scope of the invention described in the claims. The technical scope of the present disclosure should be determined based on the scope of the invention defined in the claims and the scope of its equivalents.

The present application is based on Japanese Patent Application (Patent Application No. 2022-165702) filed on October 14, 2022, Japanese Patent Application (Patent Application No. 2022-165703) filed on October 14, 2022, and Japanese Patent Application (Patent Application No. 2022-165704) filed on October 14, 2022, the contents of which are incorporated herein by reference.

## Claims

1. A method for creating a database used for leveling control of a vehicle lamp and including map information for vehicle traveling and a plurality of reference positions associated with the map information, the method comprising:
setting a representative value based on a plurality of pieces of gradient information within a region including at least one of the reference positions, and storing the representative value in association with the reference position.

2. The method according to claim 1, wherein the region is a variable region corresponding to the number of the plurality of pieces of gradient information.

3. The method according to claim 1, wherein the region is a single divided region obtained by dividing the map information into a grid.

4. The method according to claim 1, wherein the region is a circular region.

5. The method according to claim 1, wherein an average value or median value of the plurality of pieces of gradient information within the region is set as the representative value.

6. A leveling control method for controlling a leveling angle of a vehicle lamp based on the representative value within the region corresponding to a current traveling point of the vehicle or an advancing direction of the vehicle, using a database created by the method for creating a database according to any one of claims 1 to 5.

7. A database used for leveling control of a vehicle lamp, comprising:

    map information for vehicle traveling;
    a plurality of reference positions associated with the map information; and
    a representative value set in association with the reference position, based on a plurality of pieces of gradient information within a region including at least one of the reference positions.

8. A method for creating a database used for leveling control of a vehicle lamp and including map information for vehicle traveling and a plurality of reference positions associated with the map information, the method comprising:

assigning a weight to a plurality of pieces of gradient information within a region including at least one of the reference positions, and storing the weighted gradient information.

**9.** The method according to claim 8, wherein a representative value within the region is set based on the gradient information having a weight equal to or greater than a threshold value among the plurality of pieces of weighted gradient information, and the representative value corresponding to each of the plurality of reference positions is associated and stored.

**10.** A leveling control method for controlling a leveling angle of a vehicle lamp by using a database created by the method for creating a database according to claim 8 or 9.

**11.** A database used for leveling control of a vehicle lamp, comprising:

map information for vehicle traveling;
a plurality of reference positions associated with the map information;
region information including at least one of the reference positions; and
a plurality of pieces of weighted gradient information within a region represented by the region information.

**12.** A method for creating a database used for leveling control of a vehicle lamp, the method comprising:

acquiring at least one of gradient information and position information and assigning a weight to an acquired information; and
estimating and storing a predicted advancing direction from at least one of the weighted gradient information and position information.

**13.** A leveling control method for controlling a leveling angle of a vehicle lamp using a database created by the method for creating a database according to claim 12.

**14.** A database used for leveling control of a vehicle lamp, comprising:
a predicted advancing direction estimated based on at least one of acquired and weighted gradient information and position information.

**15.** A control system for setting a target leveling angle of a vehicle lamp by using a database including advancing direction information and gradient information associated with the advancing direction information, the control system comprising:

an advancing direction estimation unit configured to estimate a predicted advancing direction of a vehicle from at least position information of the vehicle,
a determination unit configured to determine whether a plurality of advancing directions correspond with each other, and
a target leveling angle calculation unit configured to calculate a target leveling angle of a vehicle lamp corresponding to a road surface angle,
wherein when the determination unit determines that the predicted advancing direction estimated by the advancing direction estimation unit corresponds with the advancing direction information recorded in advance in the database, the target leveling angle calculation unit calculates and sets a target leveling angle based on the gradient information associated with the advancing direction information.

**16.** The control system according to claim 15, wherein

the advancing direction estimation unit converts the predicted advancing direction into a predicted advancing azimuth, and
the determination unit determines that the predicted advancing direction corresponds with the advancing direction information when it is determined that the predicted advancing azimuth corresponds with advancing azimuth information converted from the advancing direction information.

**17.** The control system according to claim 15, wherein

the advancing direction estimation unit estimates a predicted speed in the predicted advancing direction, and

when the determination unit determines that the predicted speed in the predicted advancing direction corresponds with speed information of the advancing direction information, the target leveling angle calculation unit sets the target leveling angle based on the gradient information associated with the advancing direction information.

**18.** The control system according to claim 15, further comprising an advancing direction receiving unit configured to receive the advancing direction information from an outside,
wherein when the determination unit determines that the predicted advancing direction corresponds with the advancing direction information received by the advancing direction receiving unit, the target leveling angle calculation unit sets the target leveling angle based on the gradient information associated with the advancing direction information.

**19.** The control system according to claim 18, wherein

the predicted advancing direction and the advancing direction information comprise information about the vehicle, and
the determination unit determines whether the information about the vehicle in the predicted advancing direction corresponds with the information about the vehicle in the advancing direction information received by the advancing direction receiving unit.

**20.** A control system for a vehicle lamp configured to, when a vehicle has traveled along a predetermined route in the past and the vehicle travels along the predetermined route again, set a leveling angle of a vehicle lamp to the same value as a leveling angle during a past traveling along the predetermined route.

FIG.1

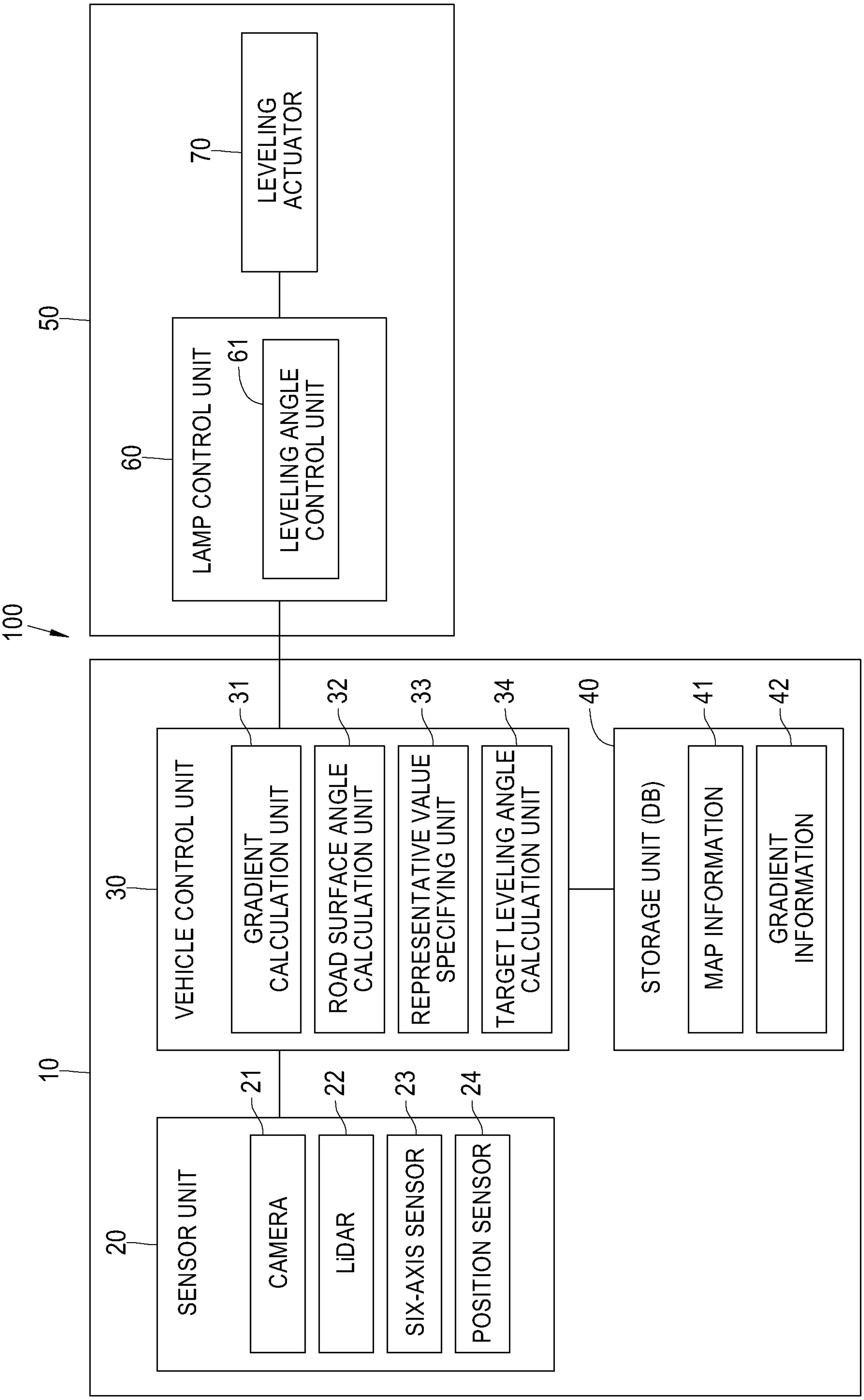
100
10
20
SENSOR UNIT
21
CAMERA
22
LiDAR
23
SIX-AXIS SENSOR
24
POSITION SENSOR
30
VEHICLE CONTROL UNIT
31
GRADIENT CALCULATION UNIT
32
ROAD SURFACE ANGLE CALCULATION UNIT
33
REPRESENTATIVE VALUE SPECIFYING UNIT
34
TARGET LEVELING ANGLE CALCULATION UNIT
40
STORAGE UNIT (DB)
41
MAP INFORMATION
42
GRADIENT INFORMATION
50
60
LAMP CONTROL UNIT
61
LEVELING ANGLE CONTROL UNIT
70
LEVELING ACTUATOR

FIG.2

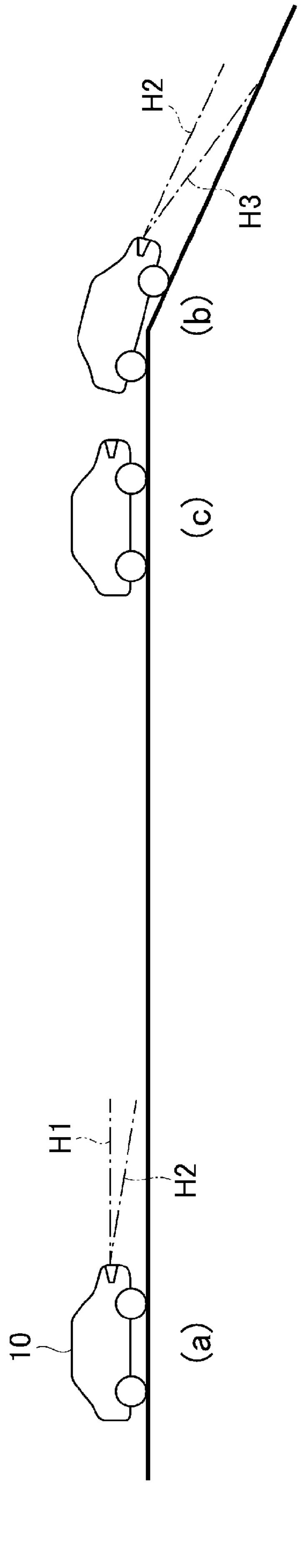

*FIG.3*

| GRADIENT INFORMA-TION ID | DETEC-TION TIME | POSITION INFORMATION | | HEIGHT [m] | ROLL ANGLE [deg] | PITCH ANGLE [deg] | YAW ANGLE [deg] | INCLINATION ANGLE $\phi$ [deg] | ADVANCING DIRECTION |
|---|---|---|---|---|---|---|---|---|---|
| | | NORTH LATITUDE | EAST LONGITUDE | | | | | | |
| ******** | ***** | **.** | ***.** | **.** | **.** | **.** | **.** | **.** | **.** |
| ... | .. | ... | ... | ... | ... | ... | ... | ... | ... |
| ... | .. | ... | ... | ... | ... | ... | ... | ... | ... |
| ... | .. | ... | ... | ... | ... | ... | ... | ... | ... |

*FIG.4*

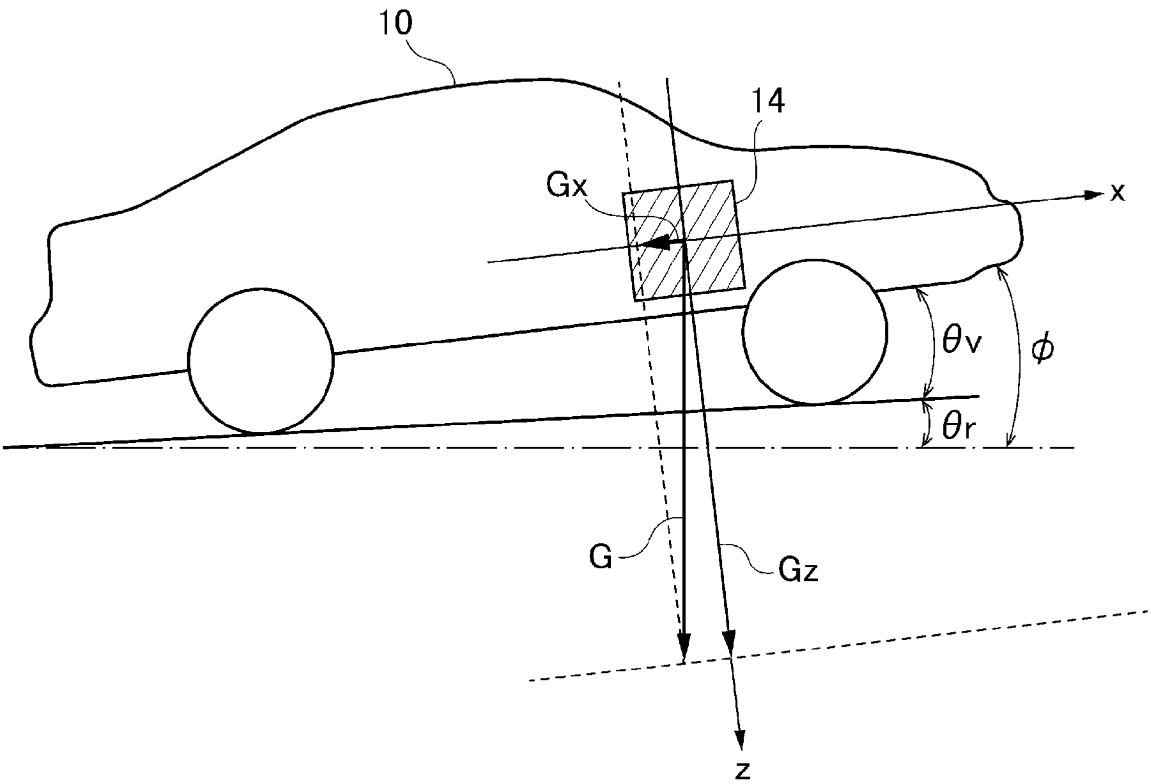

FIG.5

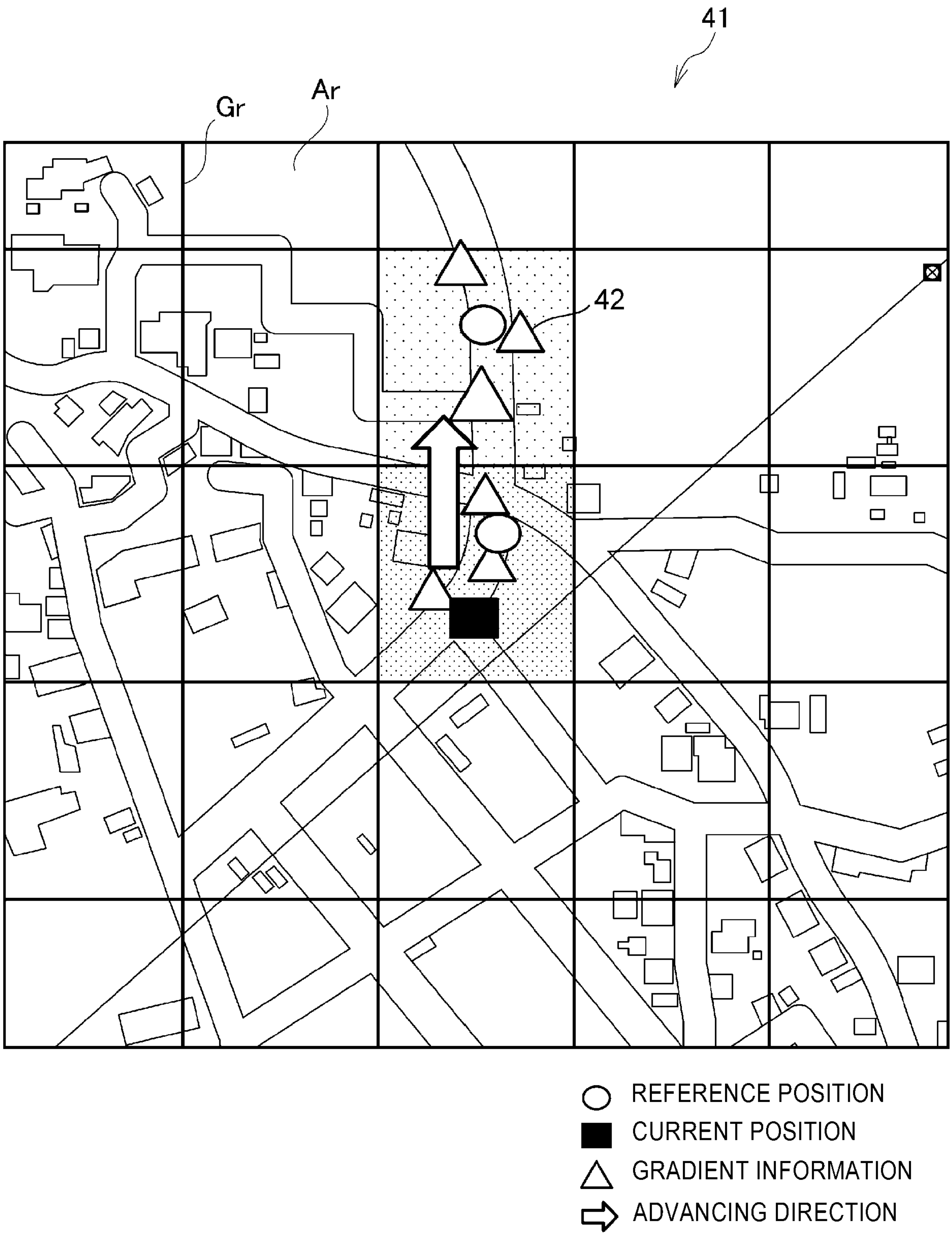
41
Gr
Ar
42
REFERENCE POSITION
CURRENT POSITION
GRADIENT INFORMATION
ADVANCING DIRECTION

FIG.6

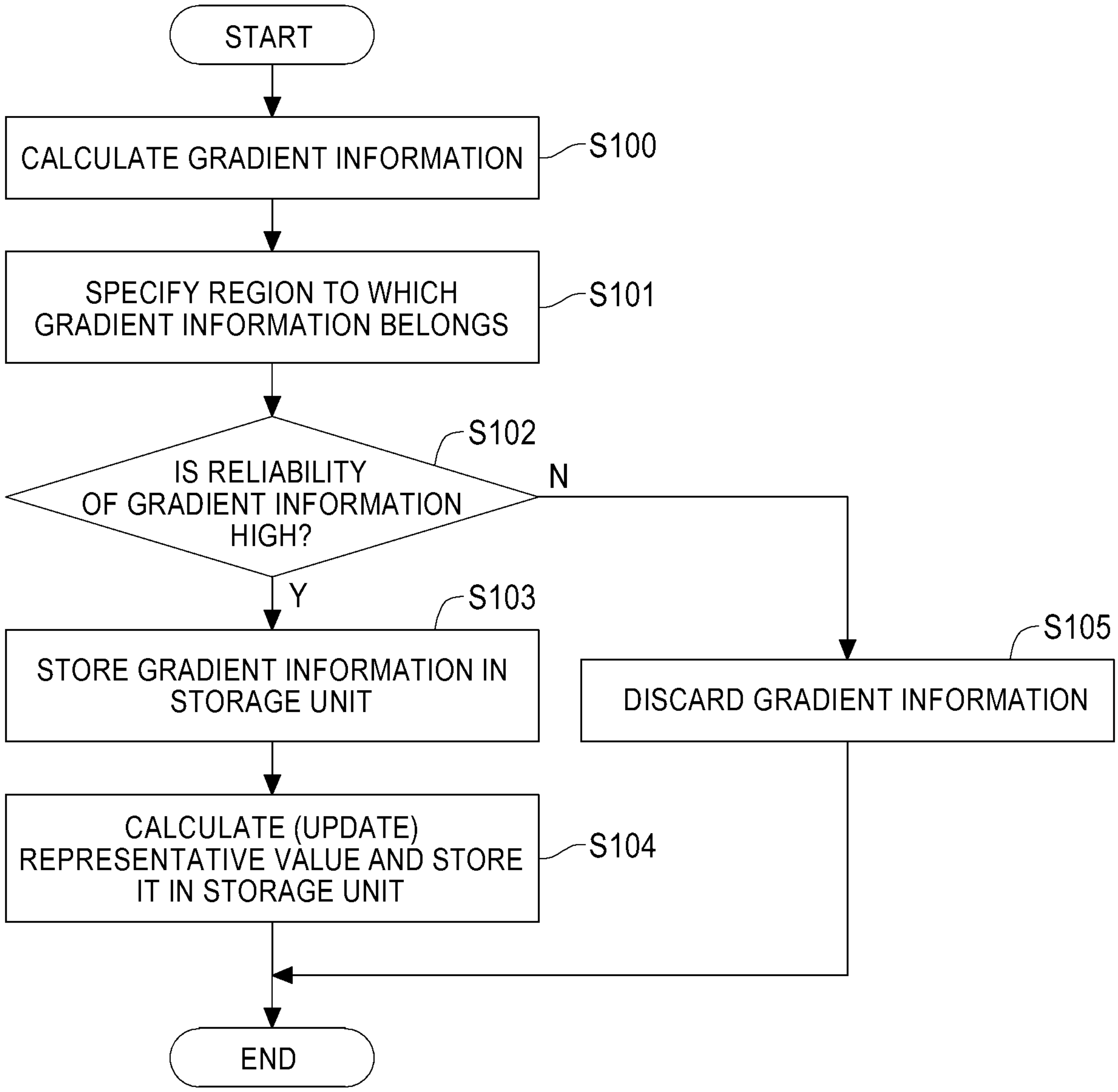
START
CALCULATE GRADIENT INFORMATION
S100
SPECIFY REGION TO WHICH GRADIENT INFORMATION BELONGS
S101
IS RELIABILITY OF GRADIENT INFORMATION HIGH?
S102
N
Y
STORE GRADIENT INFORMATION IN STORAGE UNIT
S103
DISCARD GRADIENT INFORMATION
S105
CALCULATE (UPDATE) REPRESENTATIVE VALUE AND STORE IT IN STORAGE UNIT
S104
END

FIG.7

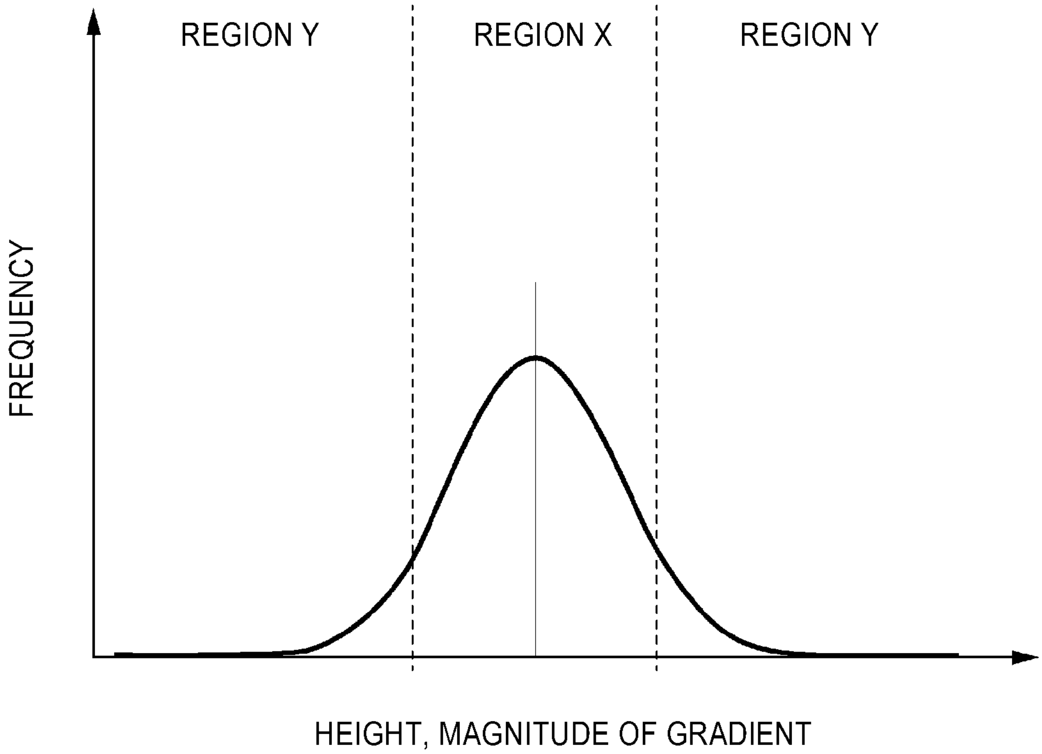
REGION Y
REGION X
REGION Y
FREQUENCY
HEIGHT, MAGNITUDE OF GRADIENT

FIG.8

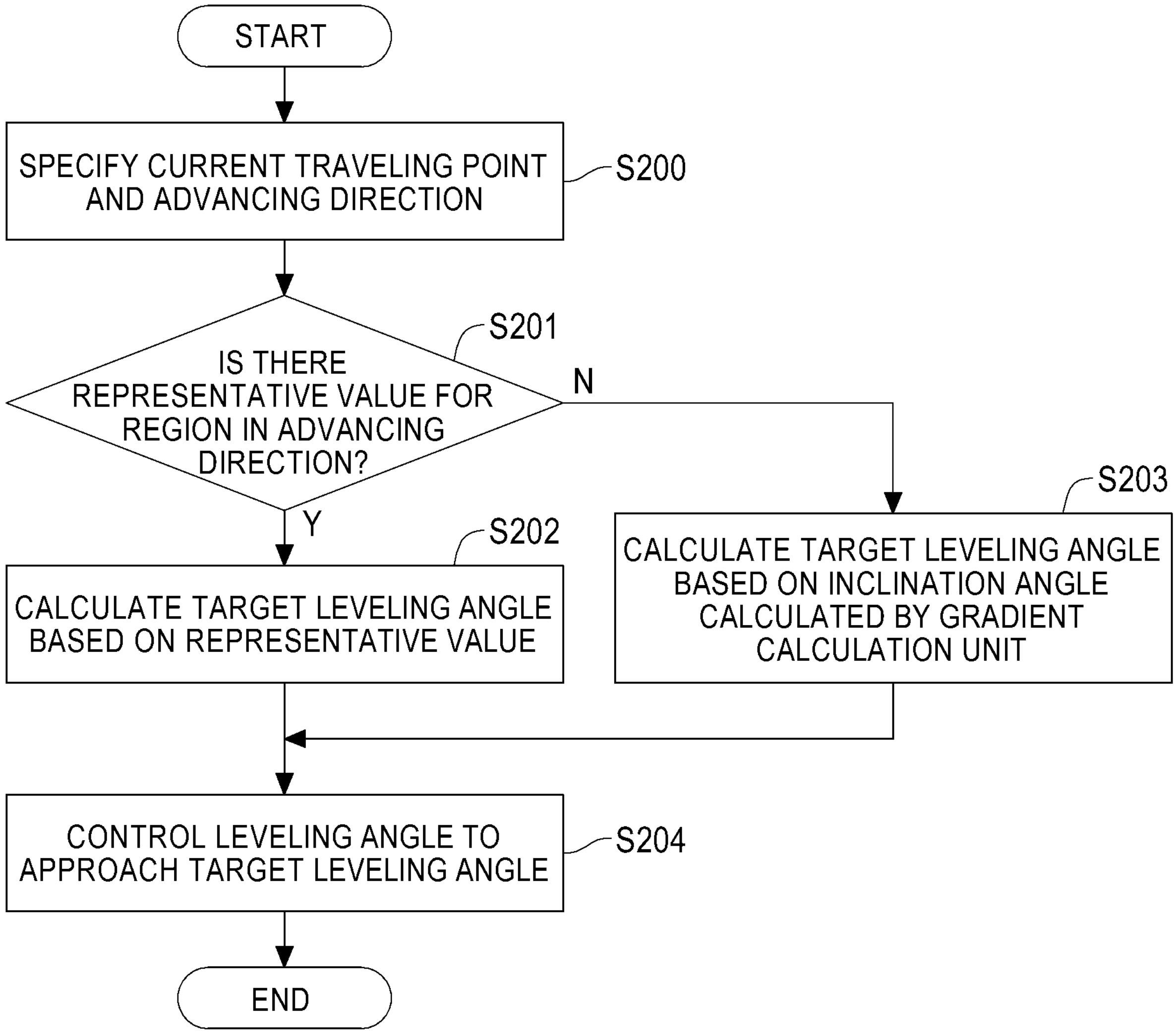
START
SPECIFY CURRENT TRAVELING POINT AND ADVANCING DIRECTION
S200
IS THERE REPRESENTATIVE VALUE FOR REGION IN ADVANCING DIRECTION?
S201
N
Y
CALCULATE TARGET LEVELING ANGLE BASED ON REPRESENTATIVE VALUE
S202
CALCULATE TARGET LEVELING ANGLE BASED ON INCLINATION ANGLE CALCULATED BY GRADIENT CALCULATION UNIT
S203
CONTROL LEVELING ANGLE TO APPROACH TARGET LEVELING ANGLE
S204
END

FIG.9

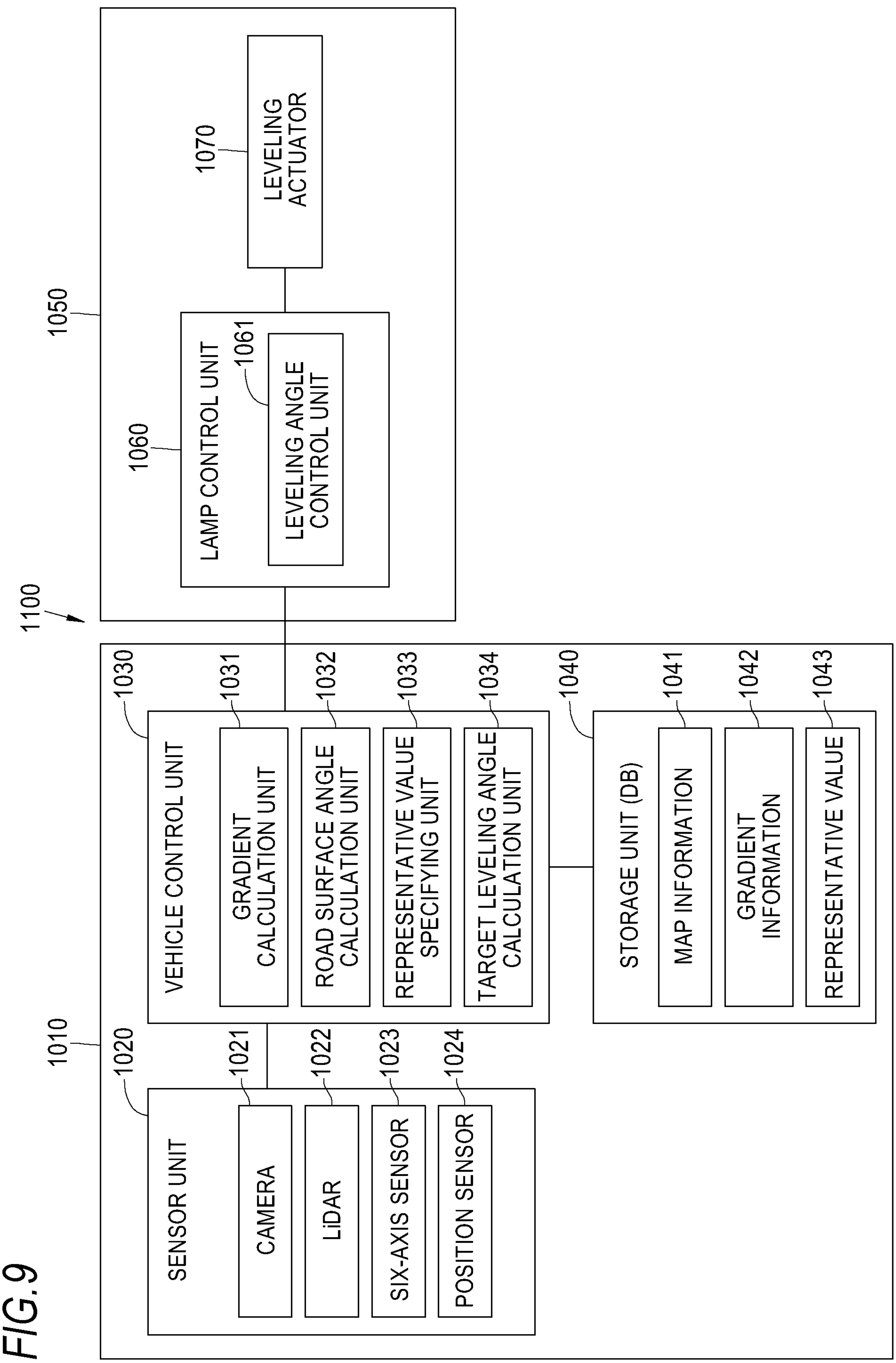
1100
1050
1060
LAMP CONTROL UNIT
1061
LEVELING ANGLE CONTROL UNIT
1070
LEVELING ACTUATOR
1010
1020
SENSOR UNIT
1021
CAMERA
1022
LiDAR
1023
SIX-AXIS SENSOR
1024
POSITION SENSOR
1030
VEHICLE CONTROL UNIT
1031
GRADIENT CALCULATION UNIT
1032
ROAD SURFACE ANGLE CALCULATION UNIT
1033
REPRESENTATIVE VALUE SPECIFYING UNIT
1034
TARGET LEVELING ANGLE CALCULATION UNIT
1040
STORAGE UNIT (DB)
1041
MAP INFORMATION
1042
GRADIENT INFORMATION
1043
REPRESENTATIVE VALUE

FIG.10

| GRADIENT INFORMA-TION ID | DETEC-TION TIME | POSITION INFORMATION | | HEIGHT [m] | ROLL ANGLE [deg] | PITCH ANGLE [deg] | YAW ANGLE [deg] | INCLINATION ANGLE $\phi$ [deg] | ADVANCING DIRECTION | WEIGHT COEFFICIENT |
|---|---|---|---|---|---|---|---|---|---|---|
| | | NORTH LATITUDE | EAST LONGITUDE | | | | | | | |
| ******** | ***** | **.** | ***.** | **.** | **.** | **.** | **.** | **.** | **.** | **.** |
| ... | .. | ... | ... | ... | ... | ... | ... | ... | ... | ... |
| ... | .. | ... | ... | ... | ... | ... | ... | ... | ... | ... |
| ... | .. | ... | ... | ... | ... | ... | ... | ... | ... | ... |

FIG.11

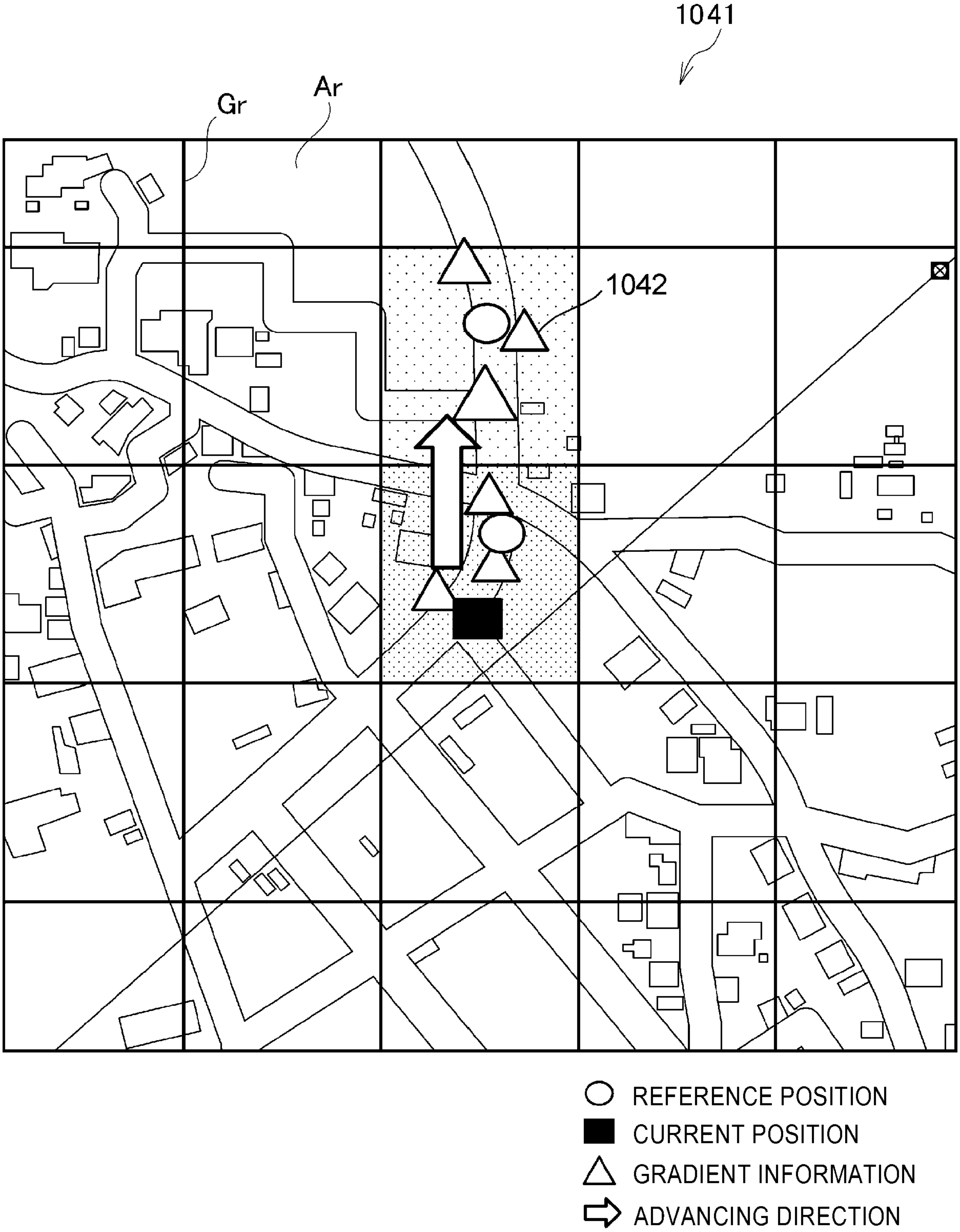
1041
Gr
Ar
1042
REFERENCE POSITION
CURRENT POSITION
GRADIENT INFORMATION
ADVANCING DIRECTION

*FIG.12*

| GRADIENT INFORMA-TION ID | DETEC-TION TIME | POSITION INFORMATION | | HEIGHT [m] | ROLL ANGLE [deg] | PITCH ANGLE [deg] | YAW ANGLE [deg] | INCLINATION ANGLE $\phi$ [deg] | ADVANCING DIRECTION | REGION ID |
|---|---|---|---|---|---|---|---|---|---|---|
| | | NORTH LATITUDE | EAST LONGITUDE | | | | | | | |
| ******** | ***** | **.** | ***.** | **.** | **.** | **.** | **.** | **.** | **.** | **.** |
| ... | .. | ... | ... | ... | ... | ... | ... | ... | ... | ... |
| ... | .. | ... | ... | ... | ... | ... | ... | ... | ... | ... |
| ... | .. | ... | ... | ... | ... | ... | ... | ... | ... | ... |

FIG.13

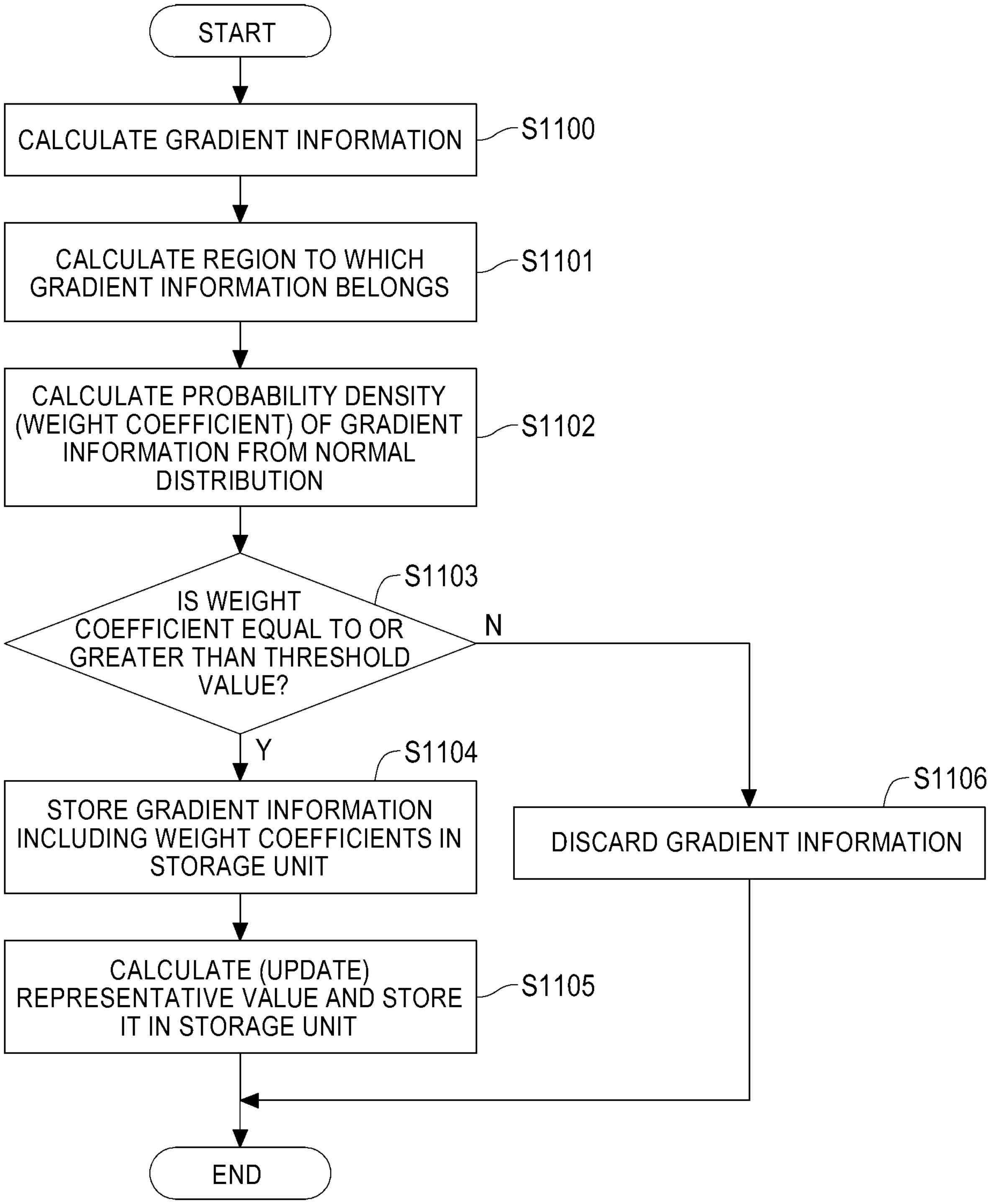
START
CALCULATE GRADIENT INFORMATION
S1100
CALCULATE REGION TO WHICH GRADIENT INFORMATION BELONGS
S1101
CALCULATE PROBABILITY DENSITY (WEIGHT COEFFICIENT) OF GRADIENT INFORMATION FROM NORMAL DISTRIBUTION
S1102
IS WEIGHT COEFFICIENT EQUAL TO OR GREATER THAN THRESHOLD VALUE?
S1103
N
Y
STORE GRADIENT INFORMATION INCLUDING WEIGHT COEFFICIENTS IN STORAGE UNIT
S1104
DISCARD GRADIENT INFORMATION
S1106
CALCULATE (UPDATE) REPRESENTATIVE VALUE AND STORE IT IN STORAGE UNIT
S1105
END

FIG.14

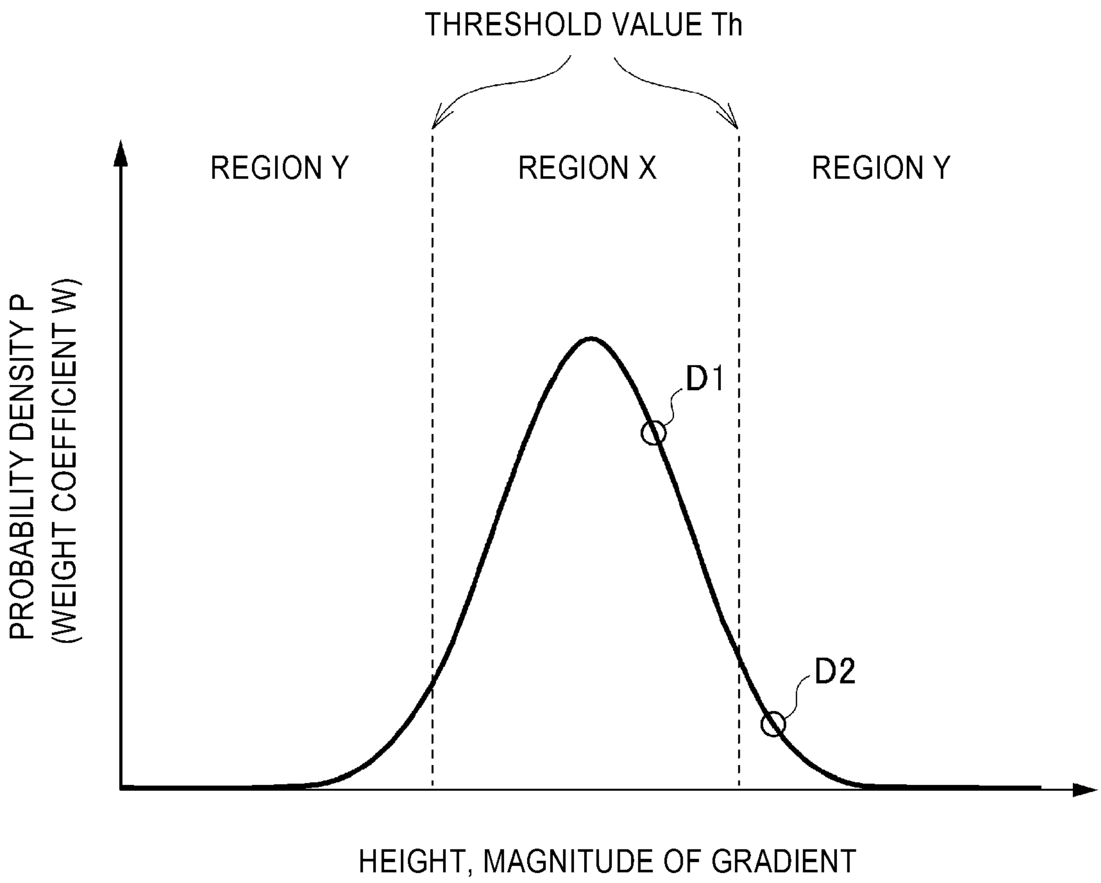
THRESHOLD VALUE Th
REGION Y
REGION X
REGION Y
PROBABILITY DENSITY P
(WEIGHT COEFFICIENT W)
D1
D2
HEIGHT, MAGNITUDE OF GRADIENT

FIG.15

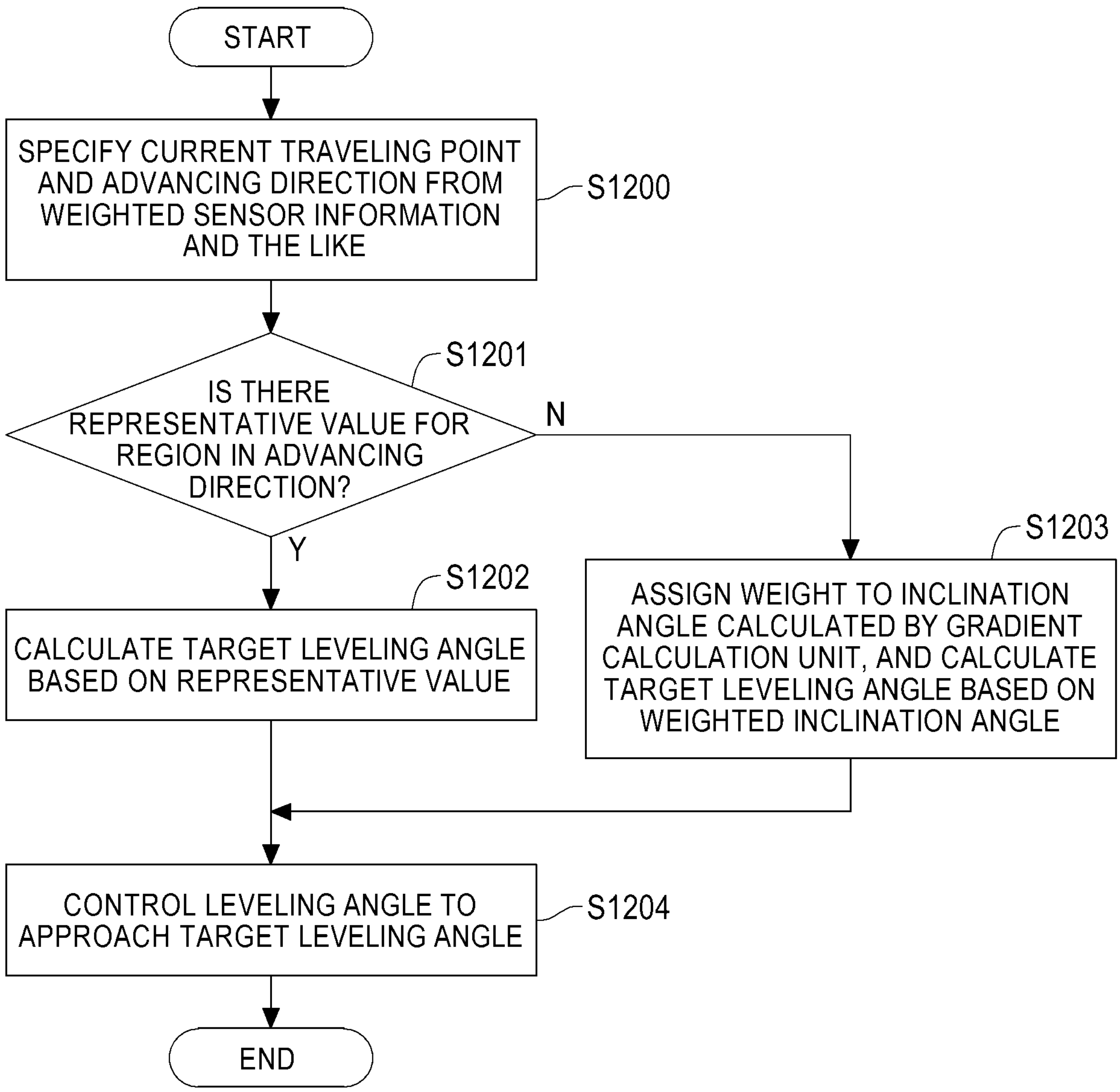
START
SPECIFY CURRENT TRAVELING POINT AND ADVANCING DIRECTION FROM WEIGHTED SENSOR INFORMATION AND THE LIKE
S1200
S1201
IS THERE REPRESENTATIVE VALUE FOR REGION IN ADVANCING DIRECTION?
N
Y
S1202
CALCULATE TARGET LEVELING ANGLE BASED ON REPRESENTATIVE VALUE
S1203
ASSIGN WEIGHT TO INCLINATION ANGLE CALCULATED BY GRADIENT CALCULATION UNIT, AND CALCULATE TARGET LEVELING ANGLE BASED ON WEIGHTED INCLINATION ANGLE
CONTROL LEVELING ANGLE TO APPROACH TARGET LEVELING ANGLE
S1204
END

FIG.16

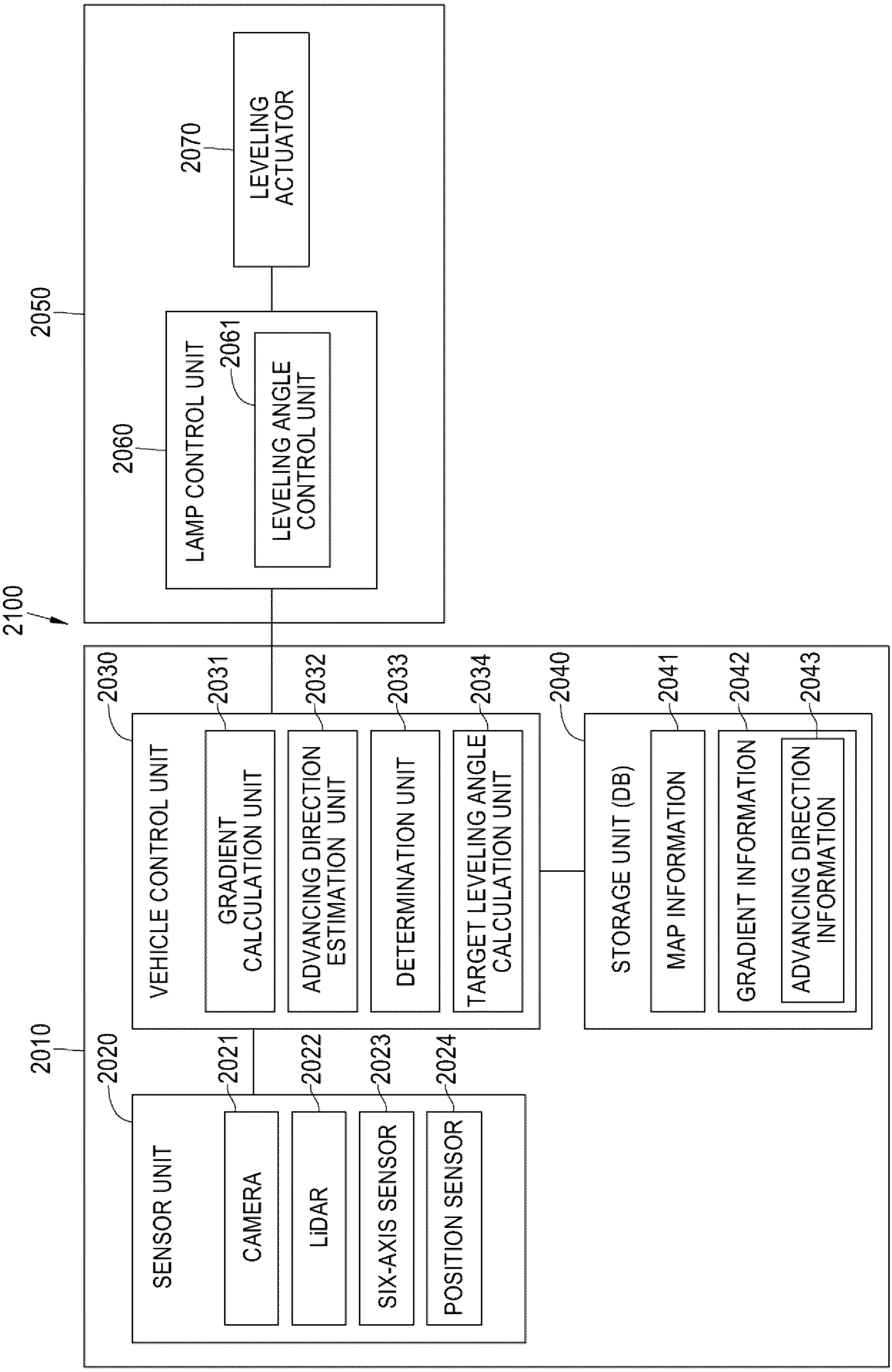
2100
2050
2060
LAMP CONTROL UNIT
2061
LEVELING ANGLE CONTROL UNIT
2070
LEVELING ACTUATOR
2010
2020
SENSOR UNIT
2021
CAMERA
2022
LiDAR
2023
SIX-AXIS SENSOR
2024
POSITION SENSOR
2030
VEHICLE CONTROL UNIT
2031
GRADIENT CALCULATION UNIT
2032
ADVANCING DIRECTION ESTIMATION UNIT
2033
DETERMINATION UNIT
2034
TARGET LEVELING ANGLE CALCULATION UNIT
2040
STORAGE UNIT (DB)
2041
MAP INFORMATION
2042
GRADIENT INFORMATION
2043
ADVANCING DIRECTION INFORMATION

FIG.17

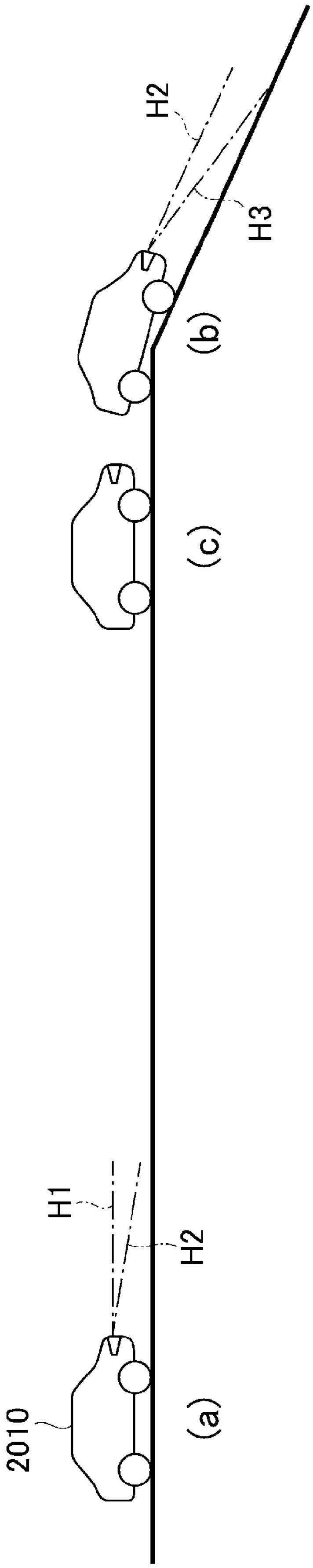

FIG.18

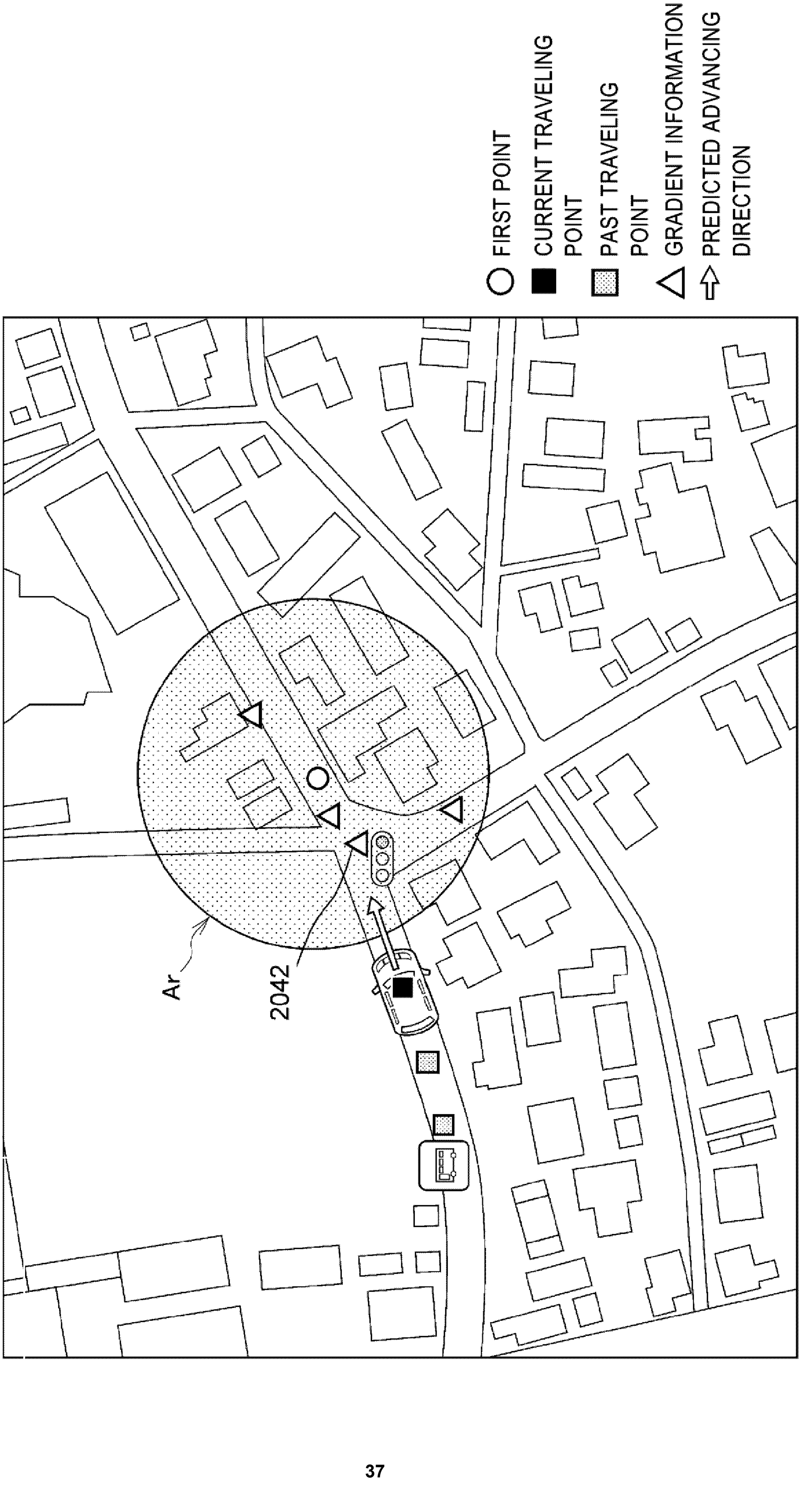
FIRST POINT
CURRENT TRAVELING POINT
PAST TRAVELING POINT
GRADIENT INFORMATION
PREDICTED ADVANCING DIRECTION
Ar
2042

*FIG.19*

| GRADIENT INFORMATION ID | DETEC -TION TIME | POSITION INFORMATION | | INCLINATION ANGLE $\phi$ [deg] |
|---|---|---|---|---|
| | | NORTH LATITUDE | EAST LONGITUDE | |
| ******** | ******** | **.** | ***.** | **.** |
| ... | ... | ... | ... | ... |
| ... | ... | ... | ... | ... |
| ... | ... | ... | ... | ... |

FIG.20

| GRADIENT INFORMATION ID | DETEC-TION TIME | POSITION INFORMATION | | INCLINATION ANGLE $\phi$ [deg] | ADVANCING DIRECTION INFORMATION |
|---|---|---|---|---|---|
| | | NORTH LATITUDE | EAST LONGITUDE | | |
| ******** | ******** | **.** | ***.** | **.** | **.** |
| ... | ... | ... | ... | ... | ... |
| ... | ... | ... | ... | ... | ... |
| ... | ... | ... | ... | ... | ... |

FIG.21

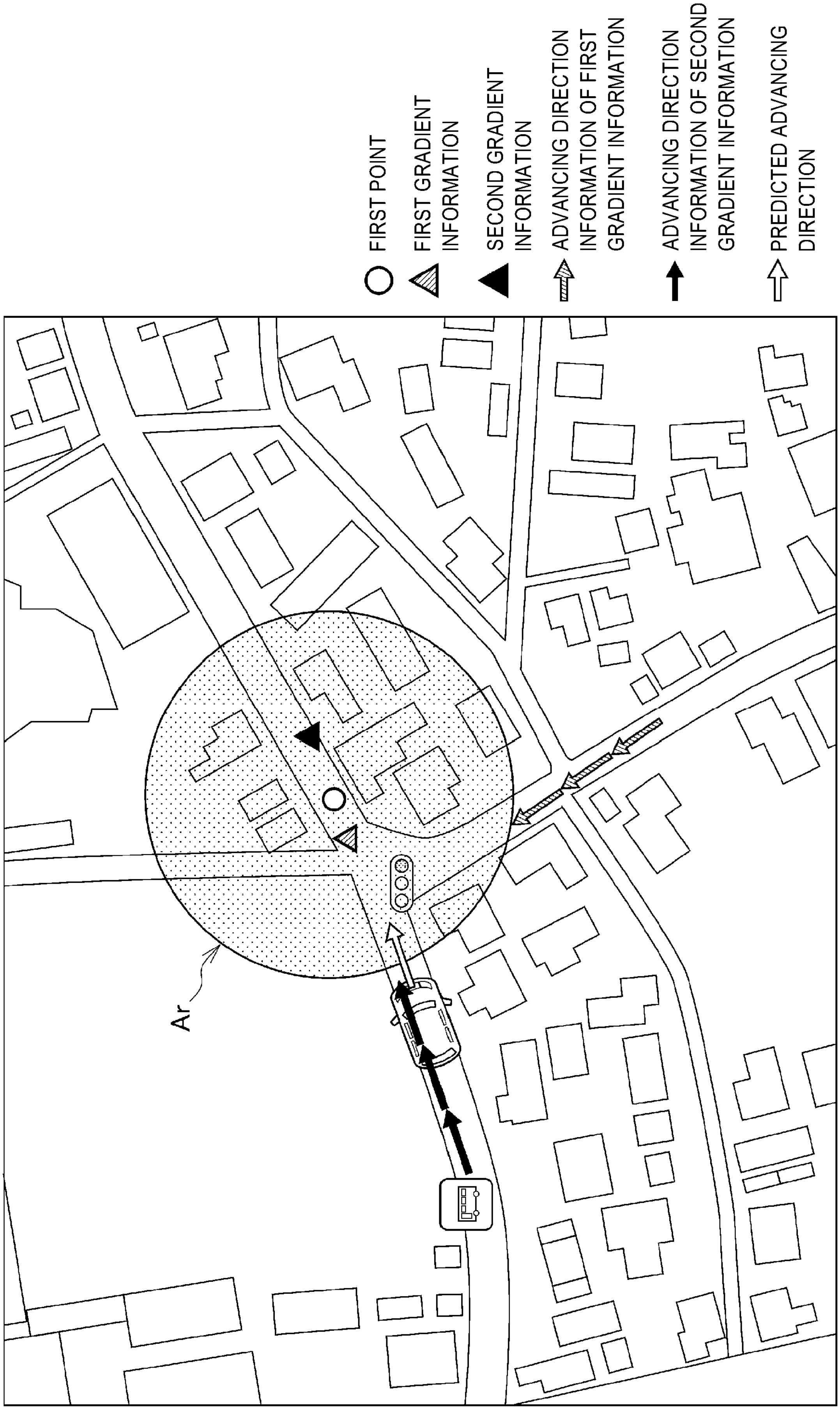
FIRST POINT
FIRST GRADIENT INFORMATION
SECOND GRADIENT INFORMATION
ADVANCING DIRECTION INFORMATION OF FIRST GRADIENT INFORMATION
ADVANCING DIRECTION INFORMATION OF SECOND GRADIENT INFORMATION
PREDICTED ADVANCING DIRECTION
Ar

FIG.22

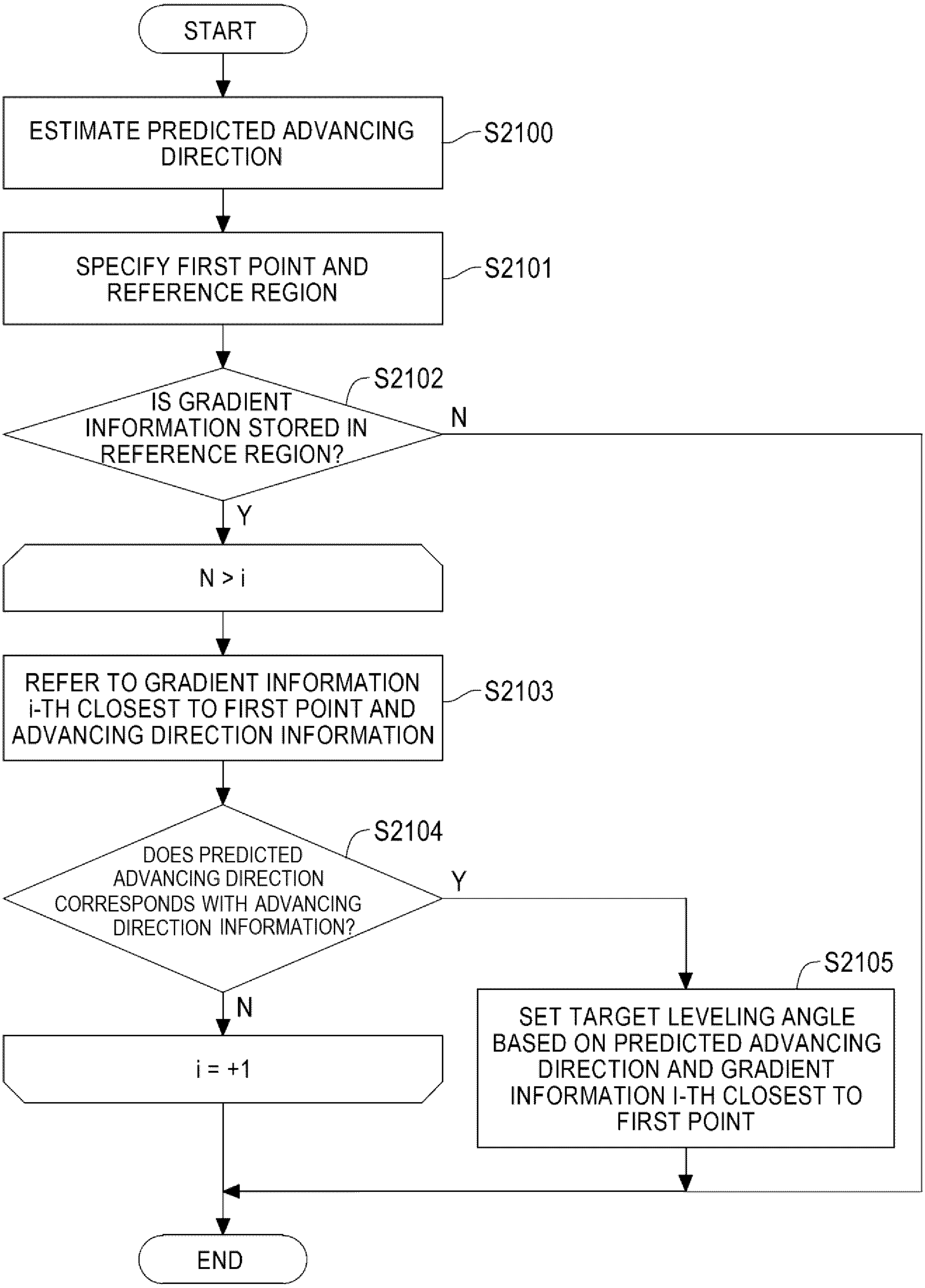
START
ESTIMATE PREDICTED ADVANCING DIRECTION
S2100
SPECIFY FIRST POINT AND REFERENCE REGION
S2101
IS GRADIENT INFORMATION STORED IN REFERENCE REGION?
S2102
N
Y
N > i
REFER TO GRADIENT INFORMATION i-TH CLOSEST TO FIRST POINT AND ADVANCING DIRECTION INFORMATION
S2103
DOES PREDICTED ADVANCING DIRECTION CORRESPONDS WITH ADVANCING DIRECTION INFORMATION?
S2104
Y
N
i = +1
SET TARGET LEVELING ANGLE BASED ON PREDICTED ADVANCING DIRECTION AND GRADIENT INFORMATION I-TH CLOSEST TO FIRST POINT
S2105
END

## INTERNATIONAL SEARCH REPORT

International application No.
**PCT/JP2023/034134**

### A. CLASSIFICATION OF SUBJECT MATTER

***B60Q 1/115***(2006.01)i
FI: B60Q1/115

According to International Patent Classification (IPC) or to both national classification and IPC

### B. FIELDS SEARCHED

Minimum documentation searched (classification system followed by classification symbols)

B60Q1/115

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-106683 A (AISIN AW CO LTD) 09 June 2014 (2014-06-09) entire text, all drawings | 1-20 |
| A | JP 2009-236714 A (TOYOTA MOTOR CORP) 15 October 2009 (2009-10-15) entire text, all drawings | 1-20 |
| A | JP 2013-124880 A (AISIN AW CO LTD) 24 June 2013 (2013-06-24) entire text, all drawings | 1-20 |
| A | JP 2008-174153 A (HOKKAIDO UNIV) 31 July 2008 (2008-07-31) entire text, all drawings | 1-20 |
| A | WO 2021/112074 A1 (PIONEER CORP) 10 June 2021 (2021-06-10) entire text, all drawings | 1-20 |
| A | JP 2006-27300 A (KOITO MFG CO LTD) 02 February 2006 (2006-02-02) entire text, all drawings | 1-20 |
| A | JP 2005-35533 A (DENSO CORP) 10 February 2005 (2005-02-10) entire text, all drawings | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/034134**

| Patent document cited in search report | Publication date (day/month/year) | Patent family member(s) | Publication date (day/month/year) |
|---|---|---|---|
| JP 2014-106683 A | 09 June 2014 | (Family: none) | |
| JP 2009-236714 A | 15 October 2009 | CN 102089196 A | |
| JP 2013-124880 A | 24 June 2013 | US 2013/0151033 A1<br>entire text, all drawings<br>EP 2604978 A2<br>CN 103162694 A | |
| JP 2008-174153 A | 31 July 2008 | US 2008/0262681 A1<br>entire text, all drawings<br>CN 101224724 A | |
| WO 2021/112074 A1 | 10 June 2021 | US 2023/0010175 A1<br>entire text, all drawings<br>EP 4071739 A1 | |
| JP 2006-27300 A | 02 February 2006 | (Family: none) | |
| JP 2005-35533 A | 10 February 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000085459 A
- JP 2022165702 A
- JP 2022165703 A
- JP 2022165704 A